# EUROPEAN PATENT APPLICATION

(11) **EP 4 650 922 A1**
(43) Date of publication of application: **19.11.2025**
(21) Application number: 25169676.1
(22) Date of filing: 10.04.2025
(51) Int. Cl.: G06F 3/048, G06F 40/109

(54) **VISUAL EFFECTS FOR MESSAGES**

(30) Priority: 13.05.2024 US 202463646763 P; 06.06.2024 US 202463657050 P; 06.11.2024 US 202418939162
(71) Applicant: Apple Inc., Cupertino, CA 95014 (US)
(72) Inventor: PAUL, Grant R., San Francisco (US); LEMAY, Stephen O., Palo Alto (US); SANDER, Loic A., Sunnyvale (US); WILSON, Eric L., San Jose (US); YERKES, Giancarlo, San Francisco (US)
(74) Representative: Zacco Denmark A/S

(57) **Abstract**

The present disclosure generally relates to visual effects for messages.

## Description

### FIELD

The present disclosure relates generally to computer user interfaces, and more specifically to techniques for providing visual effects for messages.

### BACKGROUND

Electronic devices provide the ability to send and receive communications, including communications that have text or other graphical content, such as text messages and instant messages.

### BRIEF SUMMARY

Some techniques for providing visual effects for messages using electronic devices, however, are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for providing visual effects for messages. Such methods and interfaces optionally complement or replace other methods for providing visual effects for messages. Such methods and interfaces reduce the cognitive burden on a user and produce a more efficient human-machine interface. For battery-operated computing devices, such methods and interfaces conserve power and increase the time between battery charges.

In accordance with some embodiments, a method is described. The method comprises: at a computer system that is in communication with one or more display generation components: displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and while displaying the messaging user interface, displaying, via the one or more display generation components, the first message, including: displaying the first content with a first visual effect applied to the first content; and displaying the second content without the first visual effect applied to the second content.

**In** accordance with some embodiments, a non-transitory computer-readable storage medium is described. The non-transitory computer-readable storage medium stores one or more programs configured to be executed by one or more processors of a computer system that is in communication with one or more display generation components. The one or more programs include instructions for: displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and while displaying the messaging user interface, displaying, via the one or more display generation components, the first message, including: displaying the first content with a first visual effect applied to the first content; and displaying the second content without the first visual effect applied to the second content.

In accordance with some embodiments, a transitory computer-readable storage medium is described. The transitory computer-readable storage medium stores one or more programs configured to be executed by one or more processors of a computer system that is in communication with one or more display generation components. The one or more programs include instructions for: displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and while displaying the messaging user interface, displaying, via the one or more display generation components, the first message, including: displaying the first content with a first visual effect applied to the first content; and displaying the second content without the first visual effect applied to the second content.

In accordance with some embodiments, a computer system is described. The computer system is configured to communicate with one or more display generation components. The computer system comprises: one or more processors; and memory storing one or more programs configured to be executed by the one or more processors, the one or more programs including instructions for: displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and while displaying the messaging user interface, displaying, via the one or more display generation components, the first message, including: displaying the first content with a first visual effect applied to the first content; and displaying the second content without the first visual effect applied to the second content.

In accordance with some embodiments, a computer system is described. The computer system is configured to communicate with one or more display generation components. The computer system comprises: means for displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and means for, while displaying the messaging user interface, displaying, via the one or more display generation components, the first message, including: displaying the first content with a first visual effect applied to the first content; and displaying the second content without the first visual effect applied to the second content.

In accordance with some embodiments, a computer program product is described. The computer program product comprises one or more programs configured to be executed by one or more processors of a computer system that is in communication with one or more display generation components. The one or more programs include instructions for: displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and while displaying the messaging user interface, displaying, via the one or more display generation components, the first message, including: displaying the first content with a first visual effect applied to the first content; and displaying the second content without the first visual effect applied to the second content.

In accordance with some embodiments, a method is described. The method comprises: at a computer system that is in communication with one or more display generation components and one or more input devices: displaying, via the one or more display generation components, a messaging user interface; while displaying the messaging user interface, detecting, via the one or more input devices, a set of one or more inputs corresponding to selection of first content for a message; and in response to detecting the set of one or more inputs corresponding to selection of the first content for the message: in accordance with a determination that the first content satisfies a first set of visual effect suggestion criteria, providing a representation of a first visual effect for a respective portion of the first content.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices. The one or more programs include instructions for: displaying, via the one or more display generation components, a messaging user interface; while displaying the messaging user interface, detecting, via the one or more input devices, a set of one or more inputs corresponding to selection of first content for a message; and in response to detecting the set of one or more inputs corresponding to selection of the first content for the message: in accordance with a determination that the first content satisfies a first set of visual effect suggestion criteria, providing a representation of a first visual effect for a respective portion of the first content.

In accordance with some embodiments, a transitory computer-readable storage medium is described. The transitory computer-readable storage medium stores one or more programs configured to be executed by one or more processors of a computer system that is in communication with one or more display generation components and one or more input devices. The one or more programs include instructions for: displaying, via the one or more display generation components, a messaging user interface; while displaying the messaging user interface, detecting, via the one or more input devices, a set of one or more inputs corresponding to selection of first content for a message; and in response to detecting the set of one or more inputs corresponding to selection of the first content for the message: in accordance with a determination that the first content satisfies a first set of visual effect suggestion criteria, providing a representation of a first visual effect for a respective portion of the first content.

In accordance with some embodiments, a computer system is described. The computer system is configured to communicate with one or more display generation components and one or more input devices. The computer system comprises: one or more processors; and memory storing one or more programs configured to be executed by the one or more processors, the one or more programs including instructions for: displaying, via the one or more display generation components, a messaging user interface; while displaying the messaging user interface, detecting, via the one or more input devices, a set of one or more inputs corresponding to selection of first content for a message; and in response to detecting the set of one or more inputs corresponding to selection of the first content for the message: in accordance with a determination that the first content satisfies a first set of visual effect suggestion criteria, providing a representation of a first visual effect for a respective portion of the first content.

In accordance with some embodiments, a computer system is described. The computer system is configured to communicate with one or more display generation components and one or more input devices. The computer system comprises: means for displaying, via the one or more display generation components, a messaging user interface; means for, while displaying the messaging user interface, detecting, via the one or more input devices, a set of one or more inputs corresponding to selection of first content for a message; and means for, in response to detecting the set of one or more inputs corresponding to selection of the first content for the message: in accordance with a determination that the first content satisfies a first set of visual effect suggestion criteria, providing a representation of a first visual effect for a respective portion of the first content.

In accordance with some embodiments, a computer program product is described. The computer program product comprises one or more programs configured to be executed by one or more processors of a computer system that is in communication with one or more display generation components and one or more input devices. The one or more programs include instructions for: displaying, via the one or more display generation components, a messaging user interface; while displaying the messaging user interface, detecting, via the one or more input devices, a set of one or more inputs corresponding to selection of first content for a message; and in response to detecting the set of one or more inputs corresponding to selection of the first content for the message: in accordance with a determination that the first content satisfies a first set of visual effect suggestion criteria, providing a representation of a first visual effect for a respective portion of the first content.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for providing visual effects for messages, thereby increasing the effectiveness, efficiency, and user satisfaction with such devices. Such methods and interfaces may complement or replace other methods for providing visual effects for messages.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3A is a block diagram of an exemplary multifunction device with a display and a touch-sensitive surface in accordance with some embodiments.
FIGS. 3B-3G illustrate the use of Application Programming Interfaces (APIs) to perform operations.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 6A-6AP illustrate user interfaces for providing visual effects for messages, in accordance with some embodiments.
FIG. 7 is a flow diagram illustrating methods for providing visual effects for messages, in accordance with some embodiments.
FIG. 8 is a flow diagram illustrating methods for providing visual effects for messages, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for providing visual effects for messages. In some embodiments, a computer system displays a message with a visual effect applied to a first content in a message without applying the visual effect to second content of the message. This enables a user to, e.g., emphasize a particular portion of a message by applying the visual effect to the particular portion. In some embodiments, a computer system provides a representation of a visual effect for a portion of content that has been selected for a message. This enables the computer system to, e.g., provide suggested visual effects for a portion of a message based on the content selected for the message without a user having to manually identify the visual effect. Such techniques can reduce the cognitive burden on a user who sends and/or receives messages using an electronic device, thereby enhancing productivity. Further, such techniques can reduce processor and battery power otherwise wasted on redundant user inputs.

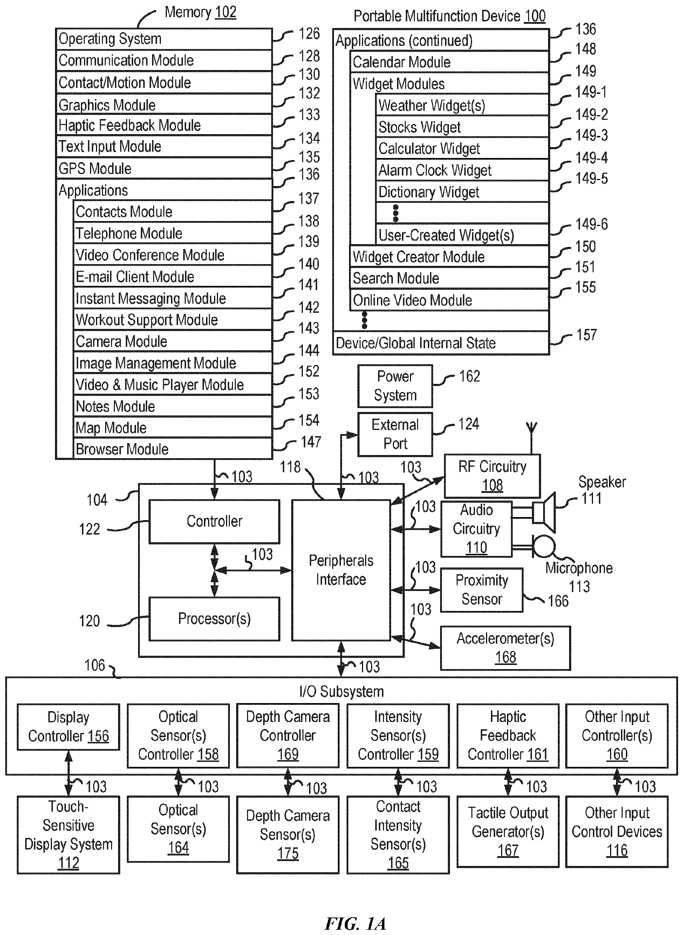

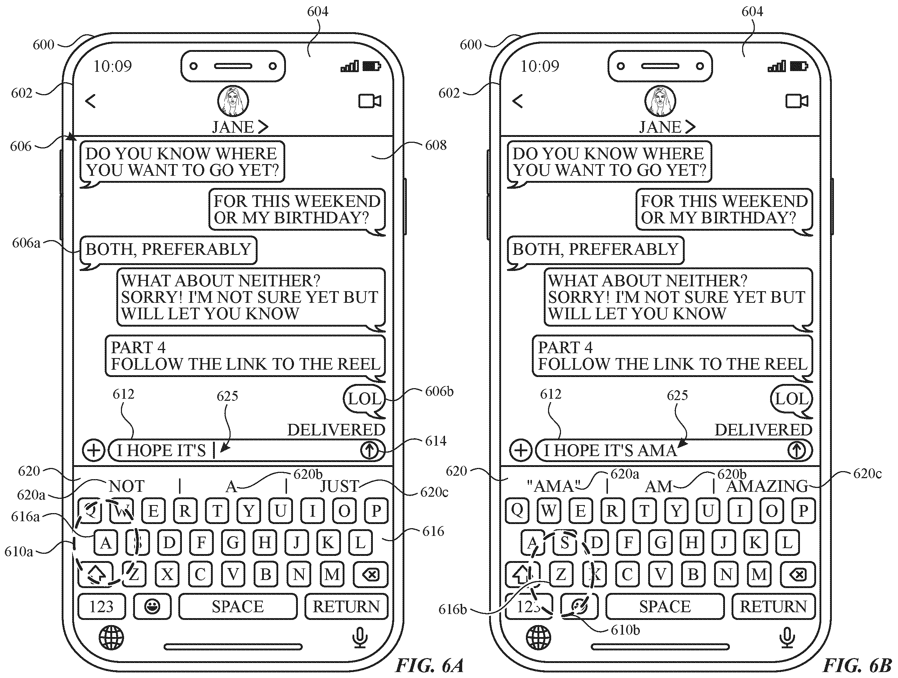

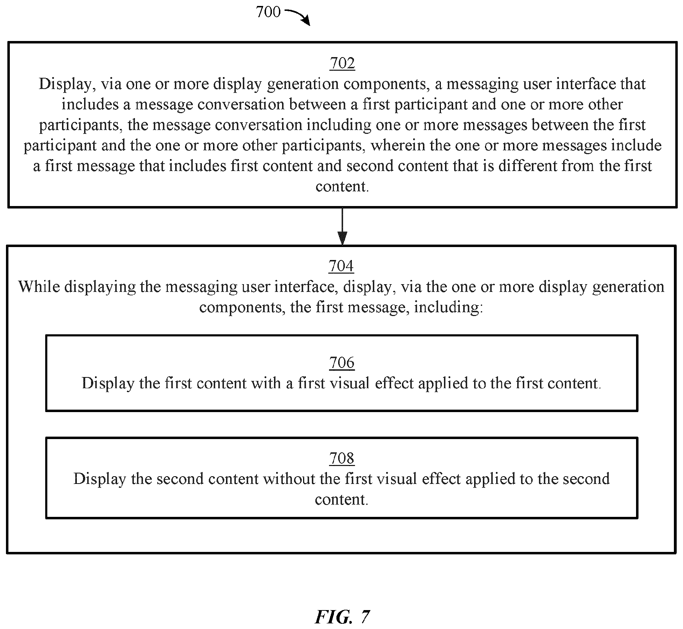

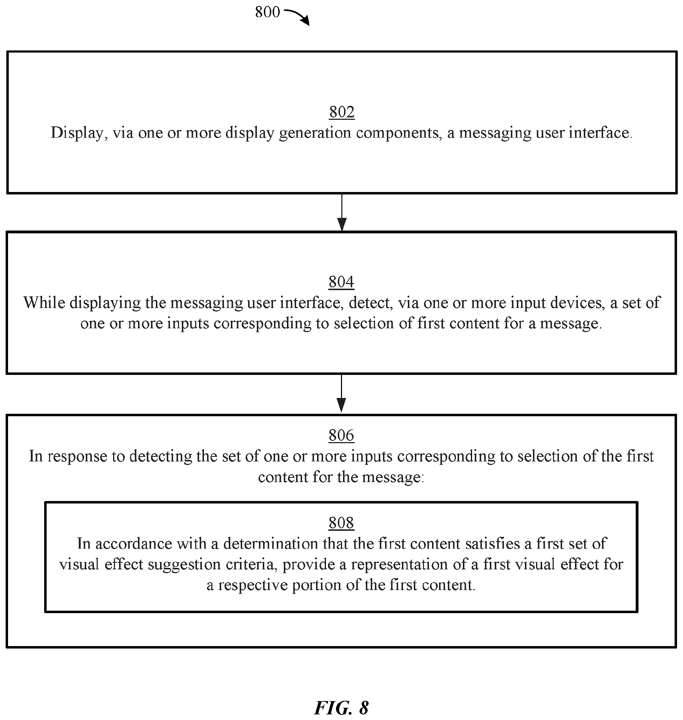

Below, FIGS. 1A-1B, 2, 3A-3G, 4A-4B, and 5A-5B provide a description of exemplary devices for performing the techniques for managing event notifications. FIGS. 6A-6AP illustrate exemplary user interfaces for providing visual effects for messages. FIG. 7 and FIG. 8 are flow diagrams illustrating methods of providing visual effects for messages in accordance with some embodiments. The user interfaces in FIGS. 6A-6AP are used to illustrate the methods described below, including the methods in FIG. 7 and FIG. 8.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in methods described herein where one or more steps are contingent upon one or more conditions having been met, the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component (e.g., a display device such as a head-mounted display (HMD), a display, a projector, a touch-sensitive display, or other device or component that presents visual content to a user, for example on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display system 112 is sometimes called a "touch screen" or a "touch-screen display" for convenience and is sometimes known as or called a "touch-sensitive display." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

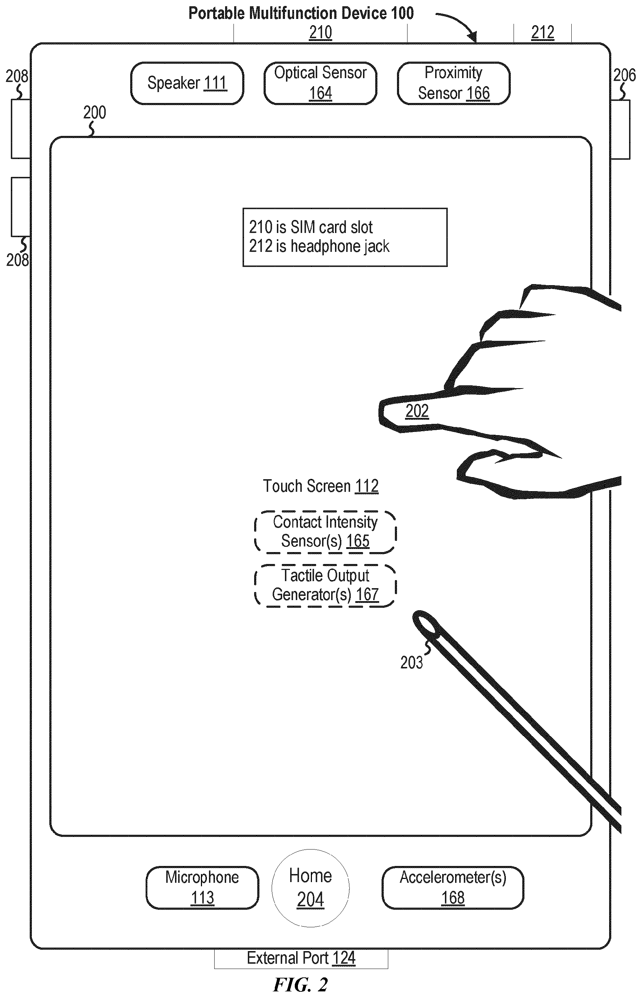

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes secure element 163 for securely storing information. In some embodiments, secure element 163 is a hardware component (e.g., a secure microcontroller chip) configured to securely store data or an algorithm. In some embodiments, secure element 163 provides (e.g., releases) secure information (e.g., payment information (e.g., an account number and/or a transaction-specific dynamic security code), identification information (e.g., credentials of a state-approved digital identification), and/or authentication information (e.g., data generated using a cryptography engine and/or by performing asymmetric cryptography operations)). In some embodiments, secure element 163 provides (or releases) the secure information in response to device 100 receiving authorization, such as a user authentication (e.g., fingerprint authentication; passcode authentication; detecting double-press of a hardware button when device 100 is in an unlocked state, and optionally, while device 100 has been continuously on a user's wrist since device 100 was unlocked by providing authentication credentials to device 100, where the continuous presence of device 100 on the user's wrist is determined by periodically checking that the device is in contact with the user's skin). For example, device 100 detects a fingerprint at a fingerprint sensor (e.g., a fingerprint sensor integrated into a button) of device 100. Device 100 determines whether the detected fingerprint is consistent with an enrolled fingerprint. In accordance with a determination that the fingerprint is consistent with the enrolled fingerprint, secure element 163 provides (e.g., releases) the secure information. In accordance with a determination that the fingerprint is not consistent with the enrolled fingerprint, secure element 163 forgoes providing (e.g., releasing) the secure information.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

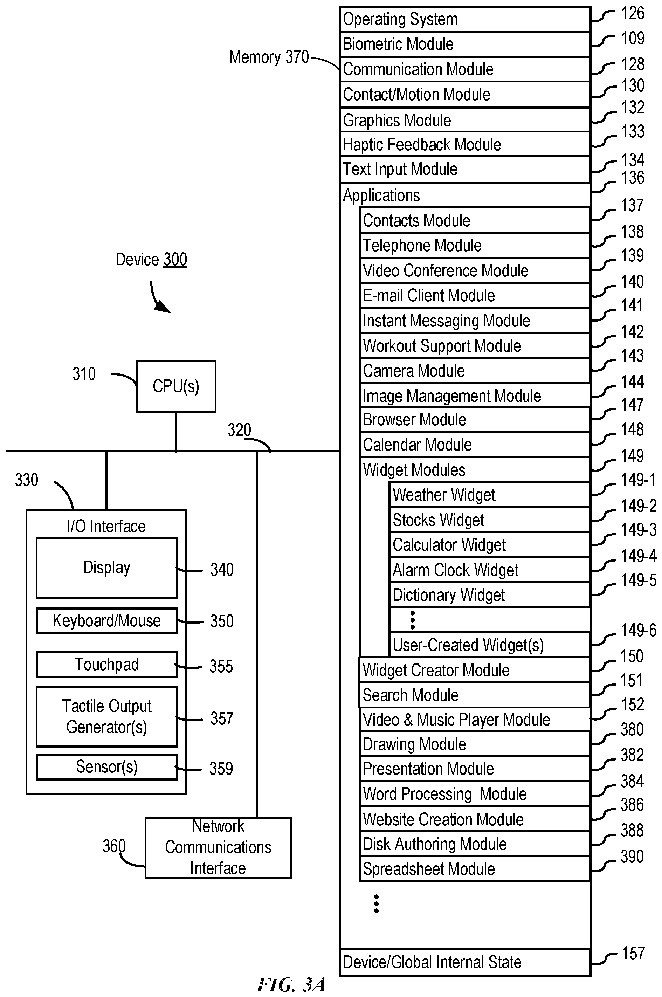

In some embodiments, the software components stored in memory 102 include operating system 126, biometric module 109, communication module (or set of instructions) 128, contact/motion module (or set of instructions) 130, graphics module (or set of instructions) 132, text input module (or set of instructions) 134, Global Positioning System (GPS) module (or set of instructions) 135, authentication module 105, and applications (or sets of instructions) 136. Furthermore, in some embodiments, memory 102 (FIG. 1A) or 370 (FIG. 3A) stores device/global internal state 157, as shown in FIGS. 1A and 3A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Biometric module 109 optionally stores information about one or more enrolled biometric features (e.g., fingerprint feature information, facial recognition feature information, eye and/or iris feature information) for use to verify whether received biometric information matches the enrolled biometric features. In some embodiments, the information stored about the one or more enrolled biometric features includes data that enables the comparison between the stored information and received biometric information without including enough information to reproduce the enrolled biometric features. In some embodiments, biometric module 109 stores the information about the enrolled biometric features in association with a user account of device 100. In some embodiments, biometric module 109 compares the received biometric information to an enrolled biometric feature to determine whether the received biometric information matches the enrolled biometric feature.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch" multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone module 138 for use in location-based dialing; to camera module 143 as picture/video metadata; and to applications that provide location-based services such as weather widgets, local yellow page widgets, and map/navigation widgets).

Authentication module 105 determines whether a requested operation (e.g., requested by an application of applications 136) is authorized to be performed. In some embodiments, authentication module 105 receives for an operation to be perform that optionally requires authentication. Authentication module 105 determines whether the operation is authorized to be performed, such as based on a series of factors, including the lock status of device 100, the location of device 100, whether a security delay has elapsed, whether received biometric information matches enrolled biometric features, and/or other factors. Once authentication module 105 determines that the operation is authorized to be performed, authentication module 105 triggers performance of the operation.

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

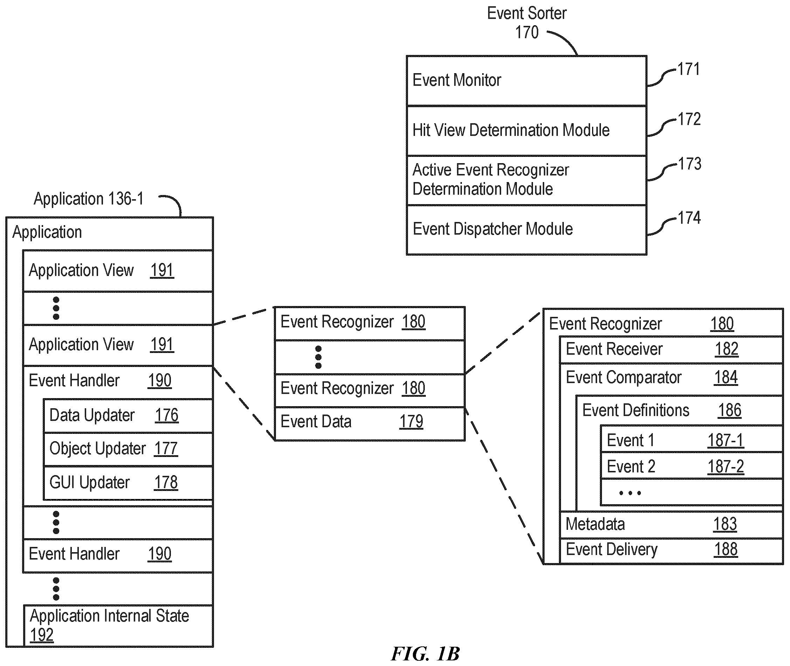

FIG. 1B is a block diagram illustrating exemplary components for event handling in accordance with some embodiments. In some embodiments, memory 102 (FIG. 1A) or 370 (FIG. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3A is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3A is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

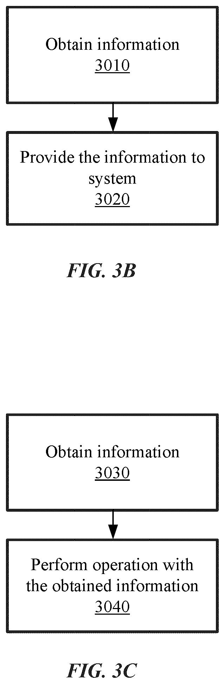

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

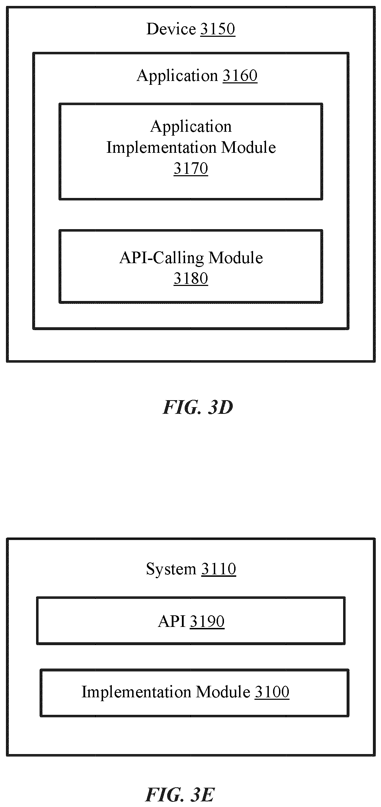

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

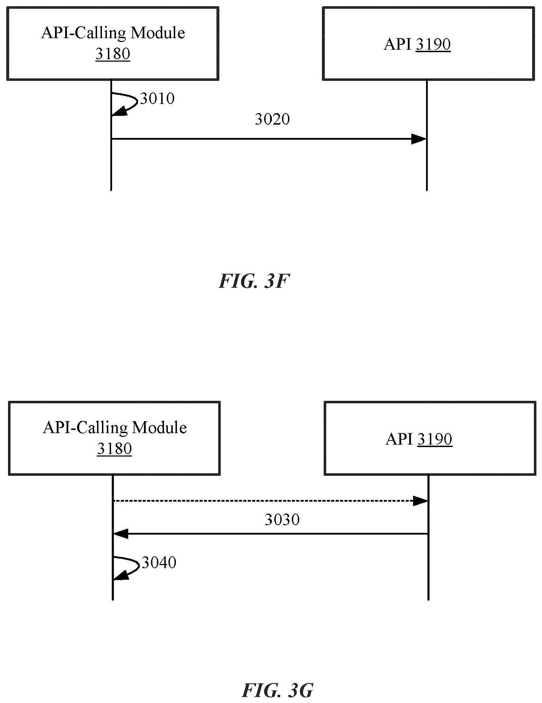

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform methods 700 and/or 800 (FIGS. 7 and/or 8) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module 3180) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

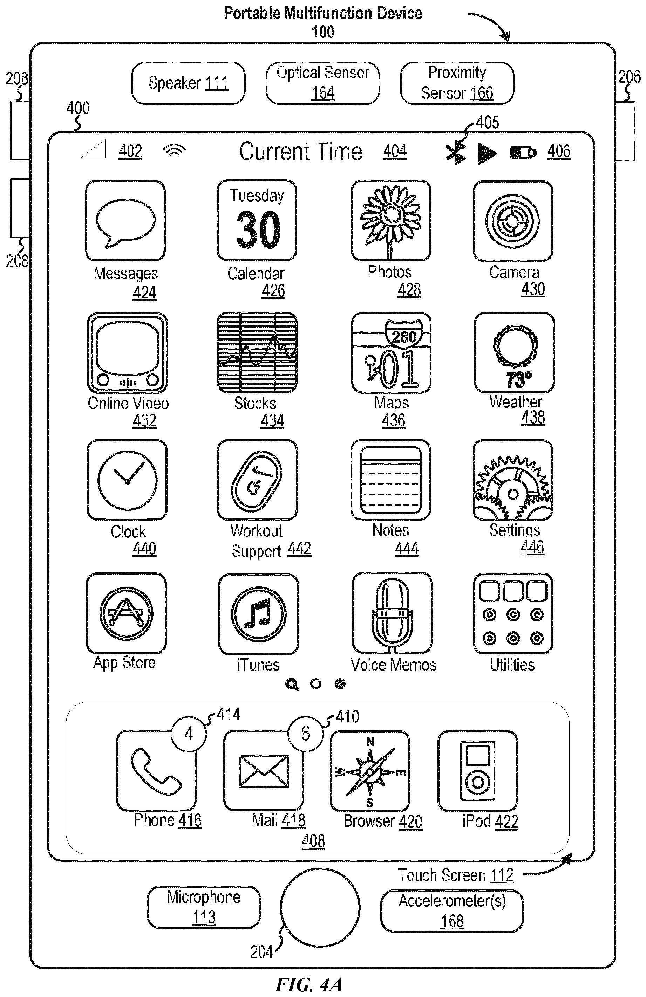

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   o Icon 416 for telephone module 138, labeled "Phone," which optionally includes an indicator 414 of the number of missed calls or voicemail messages;
   o Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   o Icon 424 for IM module 141, labeled "Messages;"
   o Icon 426 for calendar module 148, labeled "Calendar;"
   o Icon 428 for image management module 144, labeled "Photos;"
   o Icon 430 for camera module 143, labeled "Camera;"
   o Icon 432 for online video module 155, labeled "Online Video;"
   o Icon 434 for stocks widget 149-2, labeled "Stocks;"
   o Icon 436 for map module 154, labeled "Maps;"
   o Icon 438 for weather widget 149-1, labeled "Weather;"
   o Icon 440 for alarm clock widget 149-4, labeled "Clock;"
   o Icon 442 for workout support module 142, labeled "Workout Support;"
   o Icon 444 for notes module 153, labeled "Notes;" and
   o Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

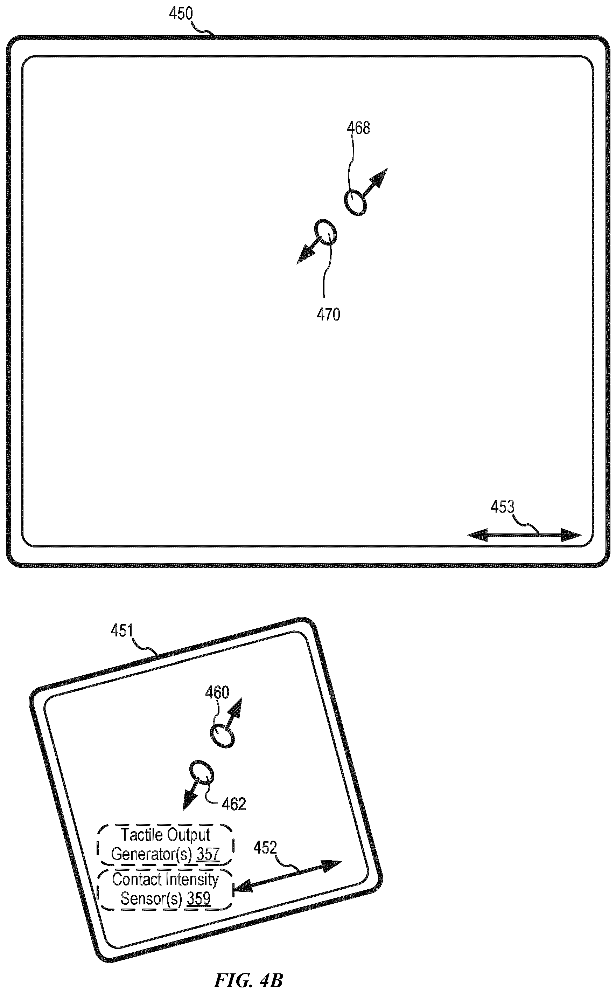

FIG. 4B illustrates an exemplary user interface on a device (e.g., device 300, FIG. 3A) with a touch-sensitive surface 451 (e.g., a tablet or touchpad 355, FIG. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

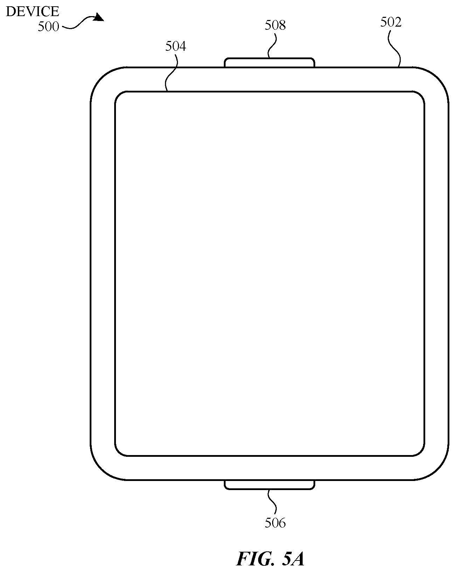

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

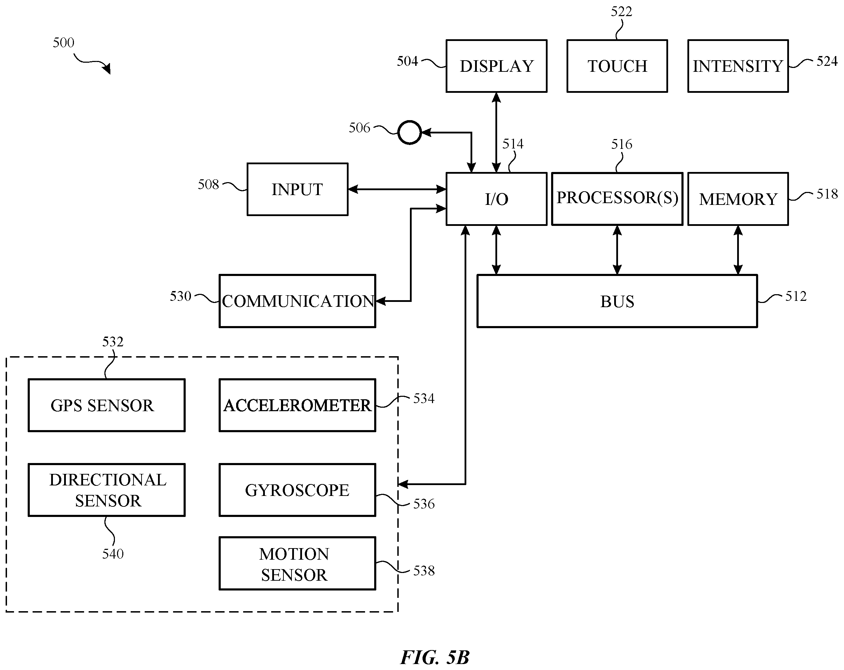

FIG. 5B depicts exemplary personal electronic device 500. In some embodiments, device 500 can include some or all of the components described with respect to FIGS. 1A, 1B, and 3A. Device 500 has bus 512 that operatively couples I/O section 514 with one or more computer processors 516 and memory 518. I/O section 514 can be connected to display screen 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage mediums, for storing computer-executable instructions, which, when executed by one or more computer processors 516, for example, can cause the computer processors to perform the techniques described below, including methods 700 and 800 (FIGS. 7 and 8). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3A, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3A or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

In some embodiments, the computer system is in a locked state or an unlocked state. In the locked state, the computer system is powered on and operational but is prevented from performing a predefined set of operations in response to user input. The predefined set of operations optionally includes navigation between user interfaces, activation or deactivation of a predefined set of functions, and activation or deactivation of certain applications. The locked state can be used to prevent unintentional or unauthorized use of some functionality of the computer system or activation or deactivation of some functions on the computer system. In some embodiments, in the unlocked state, the computer system is powered on and operational and is not prevented from performing at least a portion of the predefined set of operations that cannot be performed while in the locked state. When the computer system is in the locked state, the computer system is said to be locked. When the computer system is in the unlocked state, the computer is said to be unlocked. In some embodiments, the computer system in the locked state optionally responds to a limited set of user inputs, including input that corresponds to an attempt to transition the computer system to the unlocked state or input that corresponds to powering the computer system off.

Attention is now directed towards embodiments of user interfaces ("UI") and associated processes that are implemented on an electronic device, such as portable multifunction device 100, device 300, or device 500.

FIGS. 6A-6AP illustrate exemplary user interfaces for providing visual effects for messages, in accordance with some embodiments. The user interfaces in these figures are used to illustrate the processes described below, including the methods in FIG. 7 and FIG. 8.

FIG. 6A illustrates device 600 (e.g., a smartphone or other computer system), which includes display 602. Device 600 is associated with a first participant (e.g., Jon) of a message conversation between the first participant and a second participant (e.g., Jane). Device 600 displays user interface 604 (e.g., a messaging user interface of a messaging application). User interface 604 displays message conversation 606 between the first participant and the second participant. Message conversation 606 is displayed in region 608 (e.g., a conversation region and/or a transcript region) and includes messages between the first participant and the second participant, including, e.g., message 606a sent from the second participant to the first participant and message 606b sent from the first participant to the second participant. Messages sent by the first participant are aligned along a first side (e.g., a right side) of region 608, and messages received from other participants (e.g., the second participant) in message conversation 606 are aligned along a second side (e.g., a left side and/or an opposite side) of region 608. In the embodiments illustrated in FIGS. 6A-6AP, message conversation 606 includes only two participants. In some embodiments, the techniques described herein are implemented in message conversations that include more than two participants (e.g., 3, 5, or 10 participants).

User interface 604 includes message compose field 612. In response to detecting selection of content (e.g., via input 610a directed to keyboard 616), device 600 displays the selected content in message compose field 612 as draft message 625. User interface 604 includes suggestion region 620 (e.g., a suggestion bar) that includes suggested content (e.g., first content suggestion 620a, second content suggestion 620b, and third content suggestion 620c, collectively referred to as content suggestions 620a-620c) that can be added to draft message 625 in message compose field 612 (e.g., in response to detecting an input directed to the suggested content). In some embodiments, suggestion region 620 includes one content suggestion, two content suggestions, or more than three content suggestions.

In FIG. 6A, draft message 625 includes the content "I HOPE IT'S". Device 600 detects input 610a (e.g., one or more contacts and/or other inputs) directed to keyboard 616 corresponding to selection of additional content to include in draft message 625. As shown in FIG. 6B, in response to detecting input 610a, device 600 displays the additional content (e.g., "AMA") in message compose field 612 as part of draft message 625 and updates the suggested content in suggestion region 620 based on the current content of draft message 625. For example, in FIG. 6B, first content suggestion 620a represents a selectable option to confirm content (e.g., "AMA") as it currently exists in draft message 625; second content suggestion 620b represents a selectable option to change content "AMA" to the word "AM" in draft message 625; and third content suggestion 620c represents a selectable option to change "AMA" to the word "AMAZING" in draft message 625.

In some embodiments, device 600 displays a suggested visual effect for draft message 625 based on a set of visual effect suggestion criteria. As discussed in greater detail below, in some embodiments, device 600 displays a suggested visual effect for draft message 625 based on content in draft message 625. In the example shown in FIG. 6B, the set of visual effect suggestion criteria is not met, and therefore content suggestions 620a-620c do not include a suggested visual effect.

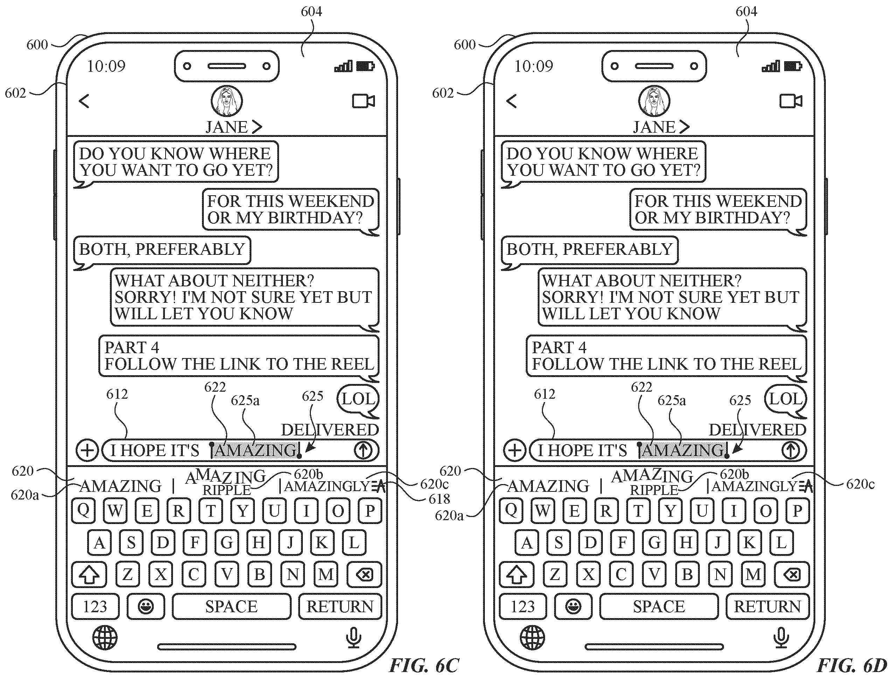

In FIG. 6B, device 600 detects input 610b (e.g., selection of one or more keys on keyboard 616, including selection of key 616b) corresponding to selection of additional content (e.g., "ZING") to include in draft message 625. In response to detecting input 610b, device 600 adds the selected content to draft message 625 and updates content suggestions 620a-620c as shown in FIG. 6C. Device 600 displays visual indicator 622 (e.g., highlighting) to indicate that the suggestion options in suggestion region 620 can be applied to content 625a in draft message 625.

In FIG. 6C, a set of visual effect suggestion criteria is met (e.g., a set of visual effect suggestion criteria corresponding to a visual effect, such as a ripple effect). For example, in the embodiment illustrated in FIG. 6C, content 625a (e.g., the word "AMAZING") in draft message 625 is a predefined word that satisfies the set of visual effect suggestion criteria. In accordance with the set of visual effect suggestion criteria being met, device 600 provides a suggested visual effect. For example, second content suggestion 620b in FIG. 6C represents a suggested visual effect (e.g., a ripple effect) that can be applied to content 625a in draft message 625. Second content suggestion 620b in FIG. 6C includes a preview of the suggested visual effect in which the suggested visual effect is applied to content 625a in suggestion region 620.

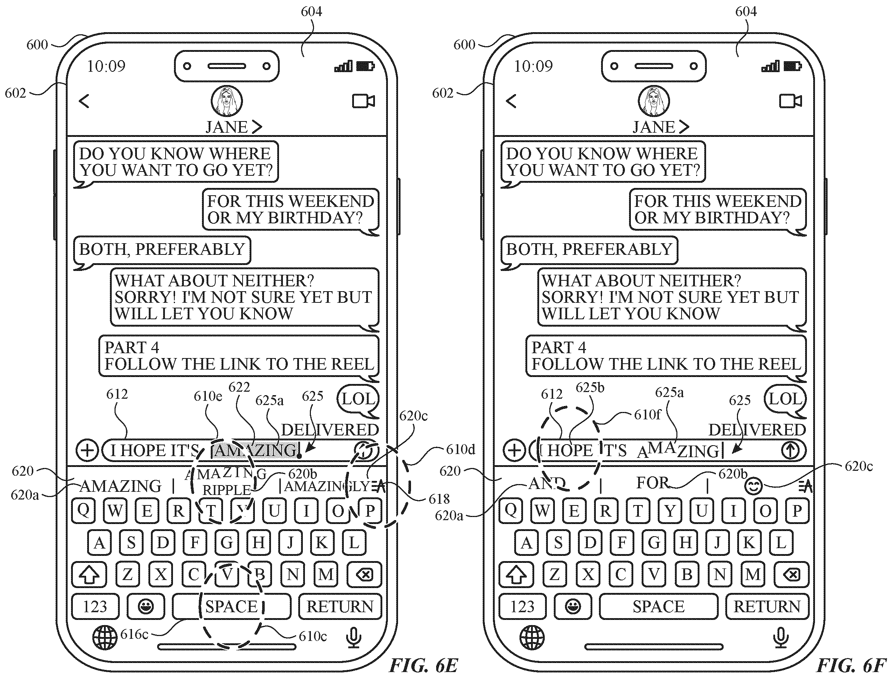

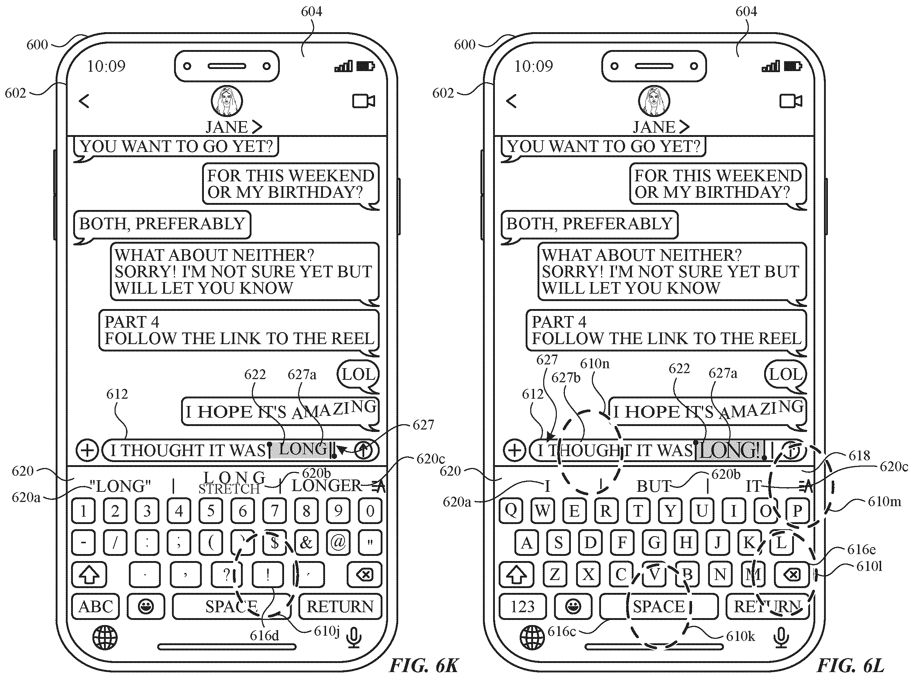

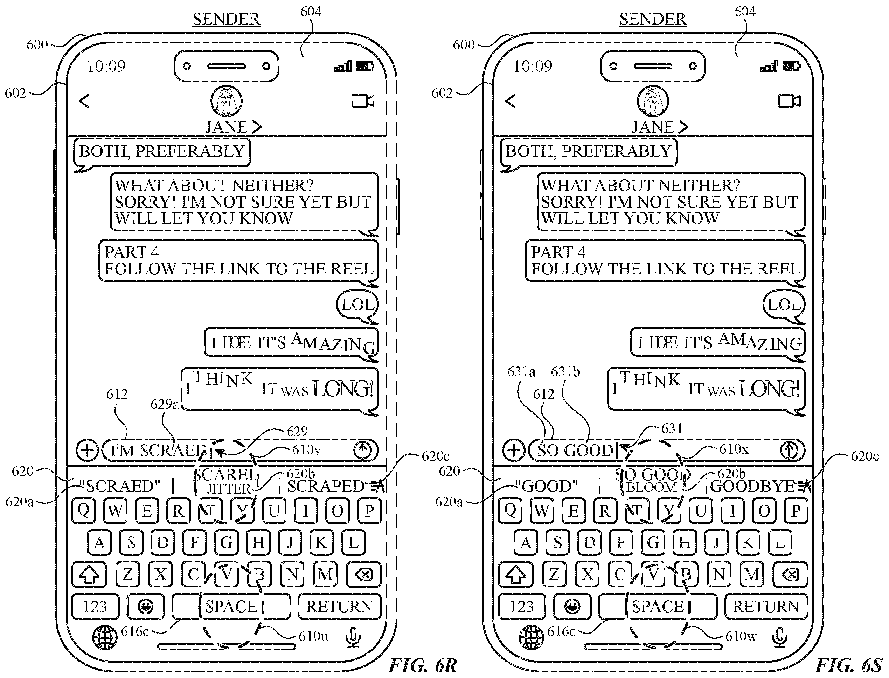

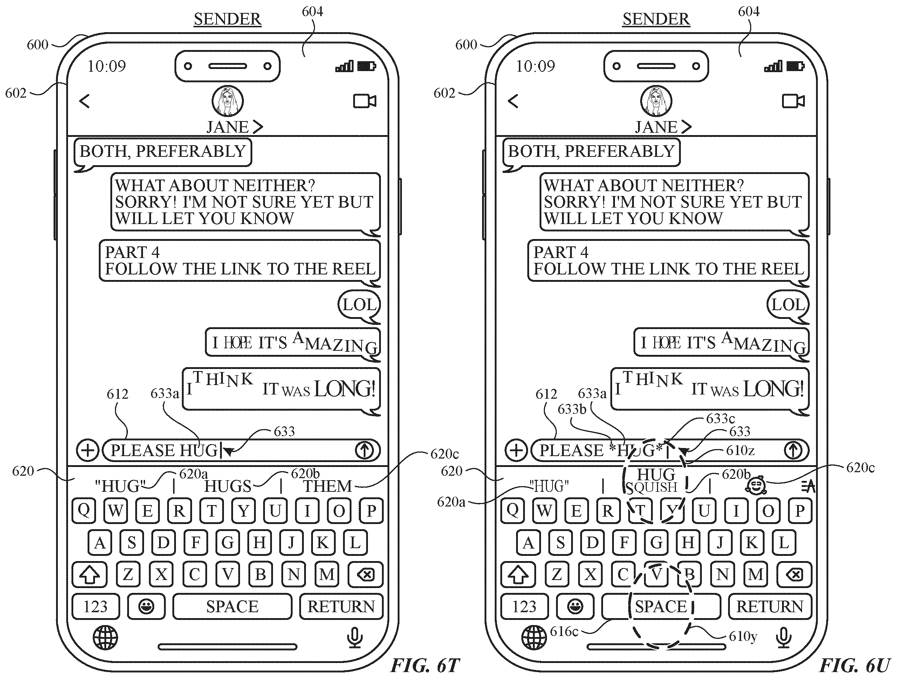

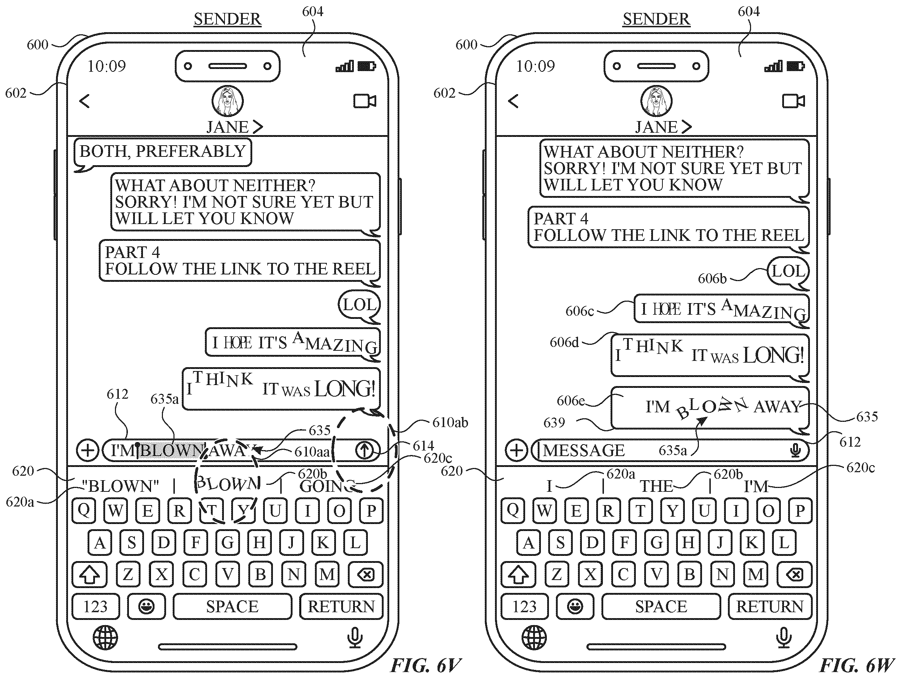

The suggested visual effect illustrated in FIGS. 6C-6E includes an animation in which different portions of content 625a move up and down over time (e.g., to create a ripple effect). FIG. 6C illustrates a first state of the suggested visual effect at a first instant in time (e.g., the "M" and "G" are raised relative to other portions of content 625a); FIG. 6D illustrates a second state of the suggested visual effect at a second instant in time (e.g., "AZ" is raised and "G" is lowered relative to FIG. 6C); and FIG. 6E illustrates a third state of the suggested visual effect at a third instant in time (e.g., the first "A" is raised relative to FIG. 6D). The states of the suggested visual effect illustrated in FIGS. 6C-6E represent a single instance of the suggested visual effect. In some embodiments, device 600 repeats and/or loops the suggested visual effect over time. In FIGS. 6C-6E, device 600 displays a name (e.g., "RIPPLE") of the suggested visual effect. In some embodiments, device 600 does not display the name (e.g., "RIPPLE) of the suggested effect (e.g., second content suggestion 620b displays a preview of the suggested visual effect without the name of the suggested visual effect, as shown in FIG. 6V). For example, in some embodiments, device 600 does not display the text "RIPPLE" in FIGS. 6C-6E, "STRETCH" in FIG. 6K, "JITTER" in FIG. 6R, "BLOOM" in FIG. 6S, and/or "SQUISH" in FIG. 6U.

In the embodiment illustrated in FIG. 6C, in response to detecting input 610b, device 600 also updates first content suggestion 620a to represent a selectable option to confirm content (e.g., "AMAZING") as it currently exists in draft message 625 (e.g., without applying the suggested visual effect represented in second content suggestion 620b to content 625a) and updates third content suggestion 620c to represent a selectable option to change "AMAZING" to the word "AMAZINGLY" in draft message 625 (e.g., without applying the suggested visual effect represented in second content suggestion 620b).

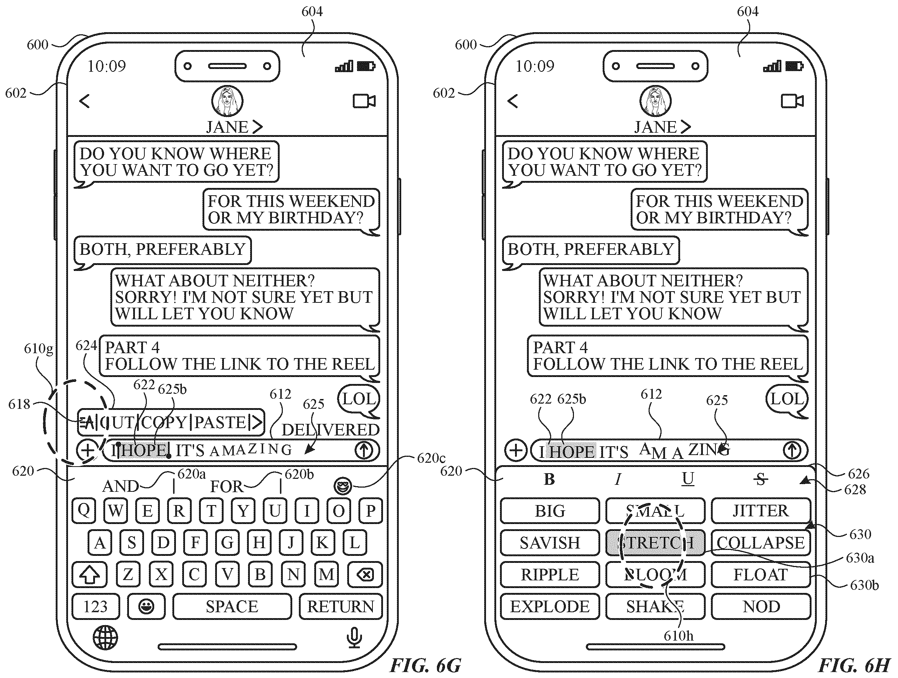

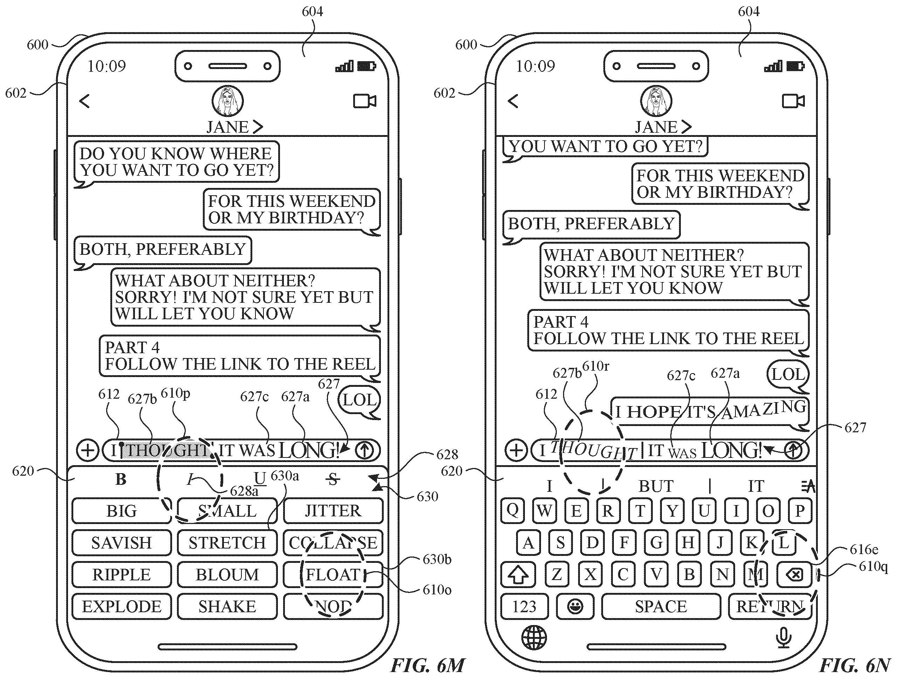

In some embodiments, device 600 applies the suggested visual effect to content 625a in draft message 625 in response to a determination that a set of visual effect suggestion criteria is met (e.g., automatically prior to and/or without requiring selection and/or confirmation of the suggested visual effect). In some embodiments, device 600 does not apply the suggested visual effect to content 625a in draft message 625 until the suggested visual effect is selected and/or confirmed (e.g., as shown in FIGS. 6C-6E). For example, in some embodiments, device 600 detects input 610d in FIG. 6E corresponding to selection of menu option 618, and in response, displays options for applying a visual effect to the emphasized portion (e.g., content 625a) of draft message 625. For example, in response to detecting input 610d in FIG. 6E, device 600 displays menu 626, text formatting options 628, and/or visual effect options 630 (e.g., as displayed and described in FIG. 6H and/or FIG. 6M) for selecting a font format and/or a visual effect for content 625a. In some embodiments, the visual effect option in visual effect options 630 corresponding to the visual effect represented in second content suggestion 620b is visually emphasized (e.g., highlighted, outlined, and/or bolded) when visual effect options 630 are initially displayed.

In some embodiments, device 600 detects input 610e in FIG. 6E corresponding to selection of second content suggestion 620b, and in response, applies the suggested visual effect to content 625a in draft message 625 as shown in FIG. 6F (e.g., content 625a is animated in message compose field 612 as described and shown in FIGS. 6C-6E when content 625a is displayed in suggestion region 620). In addition or alternatively to detecting input 610e, device 600 detects input 610c corresponding to selection of spacebar 616c, and in response, applies the suggested visual effect to content 625a in draft message 625 as shown in FIG. 6F (e.g., content 625a is animated in message compose field 612 as described and shown in FIGS. 6C-6E when content 625a is displayed in suggestion region 620). In some embodiments, in response to detecting input 610c, device 600 maintains display of content 625a in message compose field 612 without applying the suggested visual effect to content 625a. In some embodiments, device 600 displays an indication (e.g., visual indicator 622) that selection of spacebar 616c will cause the suggested visual effect (e.g., the content represented by second content suggestion 620b) to be applied to content 625a in message compose field 612. In some embodiments, in response to detecting selection of the suggested visual effect (e.g., via input 610c and/or input 610e), device 600 ceases display of visual indicator 622.

In FIG. 6F, device 600 detects input 610f selecting content 625b (e.g., the word "HOPE") of draft message 625. In response to detecting input 610f, device 600 selects (e.g., visually distinguishes, highlights, and/or otherwise emphasizes) content 625b in message compose field 612 and displays a menu for editing selected content 625b. For example, device 600 displays visual indicator 622 on content 625b and displays menu 624 as shown in FIG. 6G. Menu 624 includes menu option 618. In some embodiments, device 600 displays menu option 618 (e.g., in suggestion region 620) in response to a determination that a set of visual effect suggestion criteria is met, as shown in FIG. 6C.

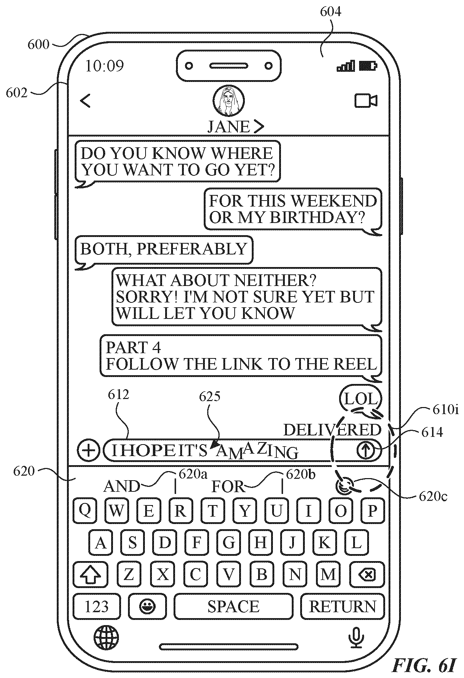

In response to detecting input 610g selecting menu option 618, device 600 displays menu 626 shown in FIG. 6H. Menu 626 includes text formatting options 628 (e.g., for bolding, italicizing, underlining, and/or striking though selected content 625b) and visual effect options 630. Visual effect options 630 includes a plurality of visual effect options, including first visual effect option 630a corresponding to a first visual effect (e.g., a stretch effect) and second visual effect option 630b corresponding to a second visual effect (e.g., a float effect). In response to detecting input 610h selecting first visual effect option 630a, device 600 applies the visual effect (e.g., the stretch effect) corresponding to first visual effect option 630a to selected content 625b in message compose field 612, as shown in FIG. 6I. In some embodiments, in response to detecting input 610h selecting first visual effect option 630a, device 600 removes display of menu 626 (e.g., and re-displays keyboard 616 and/or content suggestions 620a-620c), as shown in FIG. 6I.

In some embodiments, different effects can be applied to different portions of draft message 625. For example, in FIG. 6I, the visual effect selected for content 625a (e.g., via input 610e) is applied to content 625a and the visual effect selected for content 625b (e.g., via input 610h) is applied to content 625b in message compose field 612, where the visual effect selected for content 625a is different from the visual effect selected for content 625b.

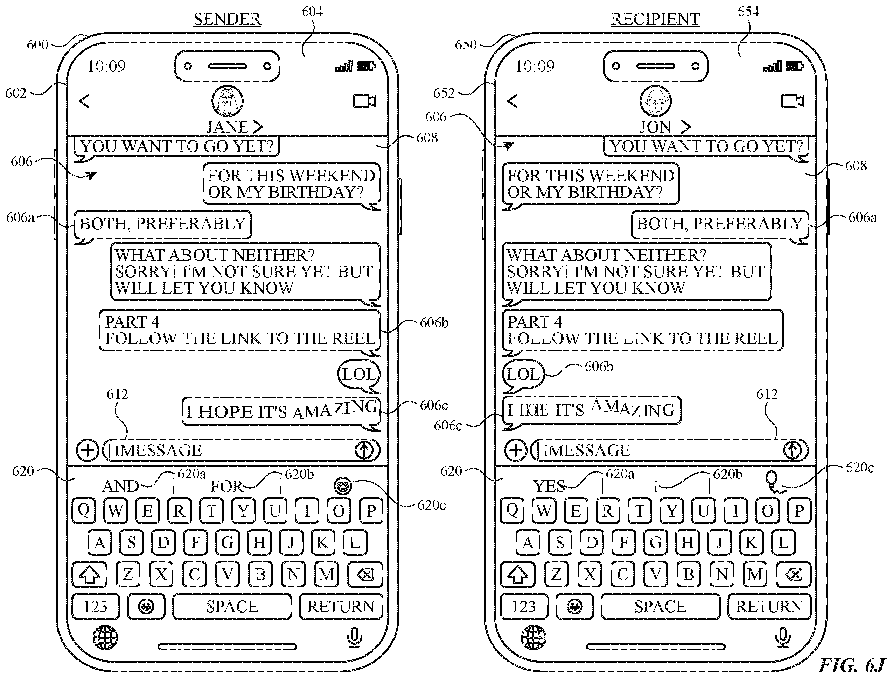

In FIG. 6I, device 600 detects input 610i selecting send button 614. In response to detecting input 610i, device 600 adds a message with the content of draft message 625 to message conversation 606 (e.g., sends a message to the other participants of message conversation 606). For example, FIG. 6J illustrates device 600 (e.g., from which the message is sent) and device 650 associated with the second participant of message conversation 606 (e.g., which receives the message sent from device 600). In FIG. 6J, device 650 displays, via display 652, user interface 654 (e.g., a messaging user interface of a messaging application), which displays message conversation 606 from the perspective of the second participant. As shown in FIG. 6J, device 600 displays message 608c on a right side of region 608 and device 650 displays message 606c on a left side of region 608. Message 606c includes the content of draft message 625 and the visual effects applied to the content of draft message 625 at the time input 610i is detected. For example, the visual effects selected for content 625a (e.g., "AMAZING") and content 625b (e.g., "HOPE") are applied to the respective portions of message 606c at both device 600 and device 650.

In some embodiments, display of a visual effect on device 600 is synchronized with display of the visual effect on device 650. In some embodiments, display of a visual effect on device 600 is not synchronized with display of the visual effect on device 650. For example, in FIG. 6J, the visual effect applied to content 625a is in a first state (e.g., with "ING" raised relative to "AMA") on device 600 while being in a second state (e.g., with "AM" raised relative to "ING") on device 650. Similarly, the visual effect applied to content 625b is in a first state (e.g., with the letters of "HOPE" relatively spaced apart) on device 600 while being in a second state (e.g., with the letters of "HOPE" closer together) on device 650. In some embodiments, device 650 displays message 606c with visual effect applied to the content of the message if device 650 is a first type of device and/or includes a first type of messaging application (e.g., a device and/or application that is capable of displaying visual effects for messages and/or is compatible with the messaging application used by device 600) and displays message 606c without visual effects applied to the content of the message if device 650 is a second type of device and/or includes a second type of messaging application (e.g., a device and/or application that is not capable of displaying visual effects for messages or is not compatible with the messaging application used by device 600).

Turning to FIG. 6K, device 600 displays user interface 604 with draft message 627 entered in message compose field 612. Draft message 627 includes content 627a (e.g., the word "LONG"), which satisfies a set of visual effect suggestion criteria (e.g., a set of visual effect suggestion criteria corresponding to a second visual effect, such as a stretch effect). In accordance with a determination that the set of visual effect suggestion criteria is met, device 600 displays a suggested visual effect (e.g., a stretch effect) for content 627a in suggestion region 620 (e.g., in second content suggestion 620b). In some embodiments, second content suggestion 620b includes a preview (e.g., an animation) of the suggested effect (e.g., analogous to the preview described in FIGS. 6C-6E). In some embodiments, the visual effect suggested in FIG. 6K is not applied to content 627a in message compose field 612 in FIG. 6K. In some embodiments, the visual effect suggested in FIG. 6K is applied to content 627a in message compose field 612 in FIG. 6K.

In some embodiments, a set of visual effect suggestion criteria is based at least in part on a predefined character (e.g., a punctuation mark, a special character, and/or placement of a predefined character). For example, in FIG. 6K, draft message 627 ends with the letter "G" in the word "LONG". While draft message 627 is in this state, device 600 detects input 610j selecting an exclamation mark to place after the word "LONG" in draft message 627. The exclamation mark satisfies a set of visual effect suggestion criteria. Accordingly, in response to detecting input 610j, device 600 applies a visual effect (e.g., a big, huge, and/or enlarge effect) to content 627a of draft message 627 in message compose field 612, as shown in FIG. 6L. The visual effect applied to content 627a in message compose field 612 in FIG. 6L is different from the suggested visual effect (e.g., a stretch effect) for content 627a in FIG. 6K (e.g., because an exclamation mark satisfies a set of criteria corresponding to a different visual effect than the visual effect that corresponds to the set of criteria satisfied by the word "LONG" without an exclamation mark). As shown in FIG. 6L, in some embodiments, device 600 automatically applies the visual effect to content 627a in draft message 627 in response to detecting input 610j without displaying an option (e.g., a separate option) to select the visual effect (e.g., in suggestion region 620). Accordingly, in some embodiments, device 600 displays a suggested visual effect in suggestion region 620 in accordance with one set of criteria being met and displays a suggested visual effect in message compose field 612 in accordance with a different set of criteria being met.

In some embodiments, device 600 ceases display of the visual effect applied to content 627a in message compose field 612 in response to detecting an input, such as input 610l corresponding to selection of delete or backspace key 616e (e.g., device 600 removes the visual effect from the word "LONG" in draft message 627 in response to input 610l). In some embodiments, as shown in FIG. 6M, in response to detecting input 610k selecting spacebar 616c while the visual effect is applied to content 627a in message compose field 612, device 600 adds a space to the end of draft message 627, removes the emphasis (e.g., visual indicator 622) from content 627a, and continues to apply the visual effect in message compose field 612 to content 627a.

In some embodiments, a font format (e.g., bold and/or italics) and a visual effect can be applied concurrently to the same content. For example, in some embodiments, device 600 detects input 610n selecting content 627b (e.g., the word "THOUGHT") in draft message 627, followed by input 610m selecting menu option 618. In response, device 600 selects content 627b in message compose field 612 and displays visual effect options 630, as shown in FIG. 6M. In FIG. 6M, device 600 detects input 610o selecting visual effect option 630b (e.g., which corresponds to a float effect) and detects input 610p selecting font option 628a (e.g., which corresponds to an italics font). In response to detecting input 610o selecting visual effect option 630b, device 600 applies the visual effect corresponding to visual effect option 630b to content 627b in message compose field 612; and in response to detecting input 610p, device 600 italicizes content 627b in message compose field 612, as shown in FIG. 6N.

In some embodiments, a visual effect applied to first content (e.g., 627a and/or a first portion of content) affects other content (e.g., content to which the visual effect is not applied), such as other content in a draft message and/or content that is immediately adjacent to the first content to which the visual effect is applied. For example, FIG. 6N illustrates a state of the visual effect applied to content 627a in draft message 627 in which a size of content 627a is enlarged (e.g., relative to other content and/or text of draft message 627) and a size of content 627c (e.g., the word "WAS" immediately adjacent to content 627a) is reduced (e.g., relative to the size of content 627c in FIG. 6M).

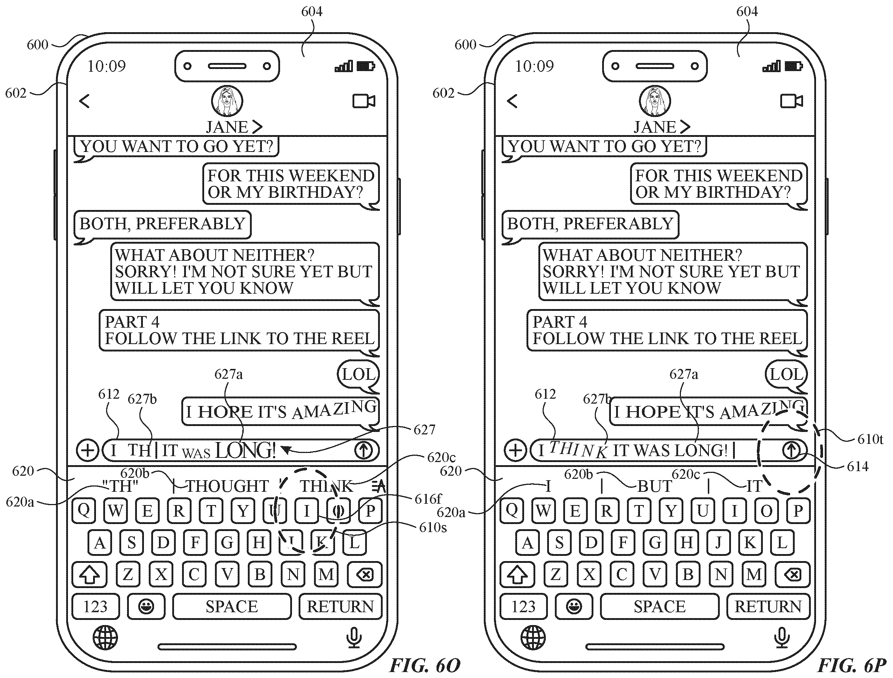

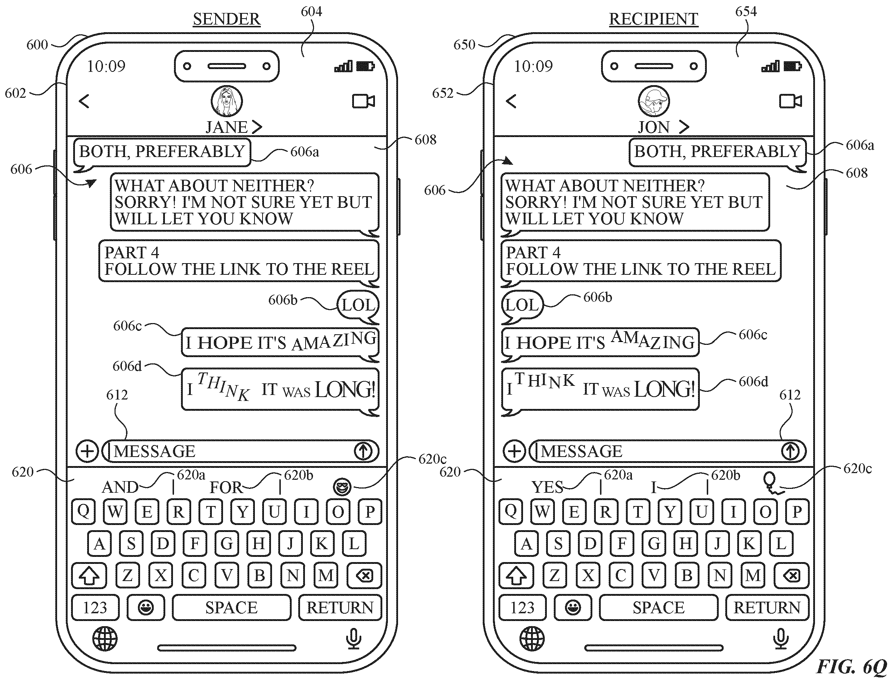

In some embodiments, device 600 maintains a font formatting and/or a visual effect applied to content when the content is edited. For example, in FIG. 6N, device 600 detects input 610r selecting content 627b (e.g., the word "THOUGHT") in draft message 627, followed by input 610q selecting delete key 616e. In response, device 600 deletes a portion of content 627b as shown in FIG. 6O (e.g., the letters "OUGHT" are removed from content 627b). In FIG. 6O, device 600 detects one or more inputs corresponding to selection of content for draft message 627 that edits content 627b (e.g., including input 610s directed to key 616f). In response, device 600 changes content 627b (e.g., to the word "THINK") while maintaining the font formatting and visual effect applied to content 627b as shown in FIG. 6P (e.g., the word "THINK" is italicized and has a float effect applied to it like the word "THOUGHT" in FIG. 6N). In FIG. 6P, device 600 detects input 610t (e.g., selection of send button 614) corresponding to a request to send draft message 627. In response to detecting input 610t, device 600 adds message 606d to message conversation 606, as shown on device 600 and device 650 in FIG. 6Q.

In some embodiments, a size (e.g., area, height, and/or width) of a message is based on a visual effect applied to the content of the message. For example, as shown in FIG. 6Q, the height of message 606d in message region 608 is increased to accommodate the visual effect applied to content 627a and/or content 627b. In some embodiments, displaying a visual effect and/or changing a size of a message that includes a visual effect affects other messages (e.g., adjacent messages). For example, in some embodiments, when a visual effect is applied to the content of message 606d, device 600 changes the position and/or size of message 606c (e.g., message 606c is moved up to accommodate an increase in a size and/or a change in position of message 606d and/or the content of message 606d when the visual effect is applied to the content of message 606d). In some embodiments, message 606d moves (e.g., changes position and/or size within region 608) when a visual effect is applied to the content of message 606d. In some embodiments, message 606d remains stationary (e.g., does not move relative to region 608) when a visual effect is applied to the content of message 606d.

In some embodiments, in accordance with a determination that a message (e.g., message 606d or draft message 627) includes two or more visual effects (e.g., a first visual effect applied to a first portion of the message and a second visual effect applied to a second portion of the message), device 600 displays (e.g., animates) a first visual effect (e.g., on a first portion of the message) at a first time and displays a second visual effect (e.g., a different effect applied to a second, different portion of the message) at a second time (e.g., display of different visual effects are staggered, initiated, and/or occur at different times). In some embodiments, in accordance with a determination that a message (e.g., message 606d or draft message 627) includes two or more visual effects (e.g., a first visual effect applied to a first portion of the message and a second visual effect applied to a second portion of the message), device 600 concurrently displays (e.g., animates) at least two of the two or more visual effects.

In some embodiments, device 600 provides a suggested spelling correction instead of or in addition to a suggested visual effect. For example, in FIG. 6R, draft message 629 has been entered into message compose field 612. Draft message 629 includes content 629a (e.g., the text "SCRAED") that is determined to potentially be a misspelled word that satisfies a set of spelling correction criteria. In accordance with a determination that the content of draft message 629 (e.g., content 629a) satisfies the set of spelling correction criteria, device 600 displays a suggested spelling correction (e.g., "SCARED" in second content suggestion 620b). Draft message 629 also satisfies a set of suggested visual effect criteria. In accordance with a determination that content 629a satisfies a set of suggested visual effect criteria, device 600 provides a suggested visual effect for the suggested spelling correction that corresponds to the set of suggested visual effect criteria satisfied by content 629a. For example, a jitter visual effect is applied to the suggested spelling correction in second content suggestion 620b in FIG. 6R. In some embodiments, device 600 provides a suggested spelling correction without providing a suggested visual effect (e.g., even if content 629a satisfies a set of suggested visual effect criteria).

In response to detecting input 610v selecting second content suggestion 620b in FIG. 6R, device 600 replaces misspelled content 629a (e.g., "SCRAED") in message compose field 612 with the suggested spelling correction in second content suggestion 620b (e.g., "SCARED") and applies the visual effect (e.g., the jitter effect) to the suggested spelling correction. In addition or alternatively to detecting input 610v, device 600 detects input 610u selecting spacebar 616c in FIG. 6R. In response to detecting input 610u, device 600 replaces misspelled content 629a (e.g., "SCRAED") in message compose field 612 with the suggested spelling correction in second content suggestion 620b (e.g., "SCARED") and applies the visual effect (e.g., the jitter effect) to the suggested spelling correction. In some embodiments, in response to detecting input 610u, device 600 maintains display of the misspelled word in message compose field 612.

In some embodiments, device 600 provides a suggested visual effect for content that includes more than one word. For example, in FIG. 6S, draft message 631 has been entered into message compose field 612. Draft message 631 includes first word 631a (e.g., "SO") and second word 631b (e.g., "GOOD"). The combination of first word 631a and second word 631b satisfies a set of suggested visual effect criteria. In accordance with a determination that the combination of first word 631a and second word 631b satisfies the set of suggested visual effect criteria, device 600 provides a suggested visual effect (e.g., a bloom effect) for first word 631a and second word 631b (e.g., a visual effect that is applied to both first word 631a and second word 631b), as indicated by display of both first word 631a and second word 631b in second content suggestion 620b. In response to detecting input 610x selecting second content suggestion 620b, device 600 displays draft message 631 in message compose field 612 with the suggested visual effect applied to both first word 631a and second word 631b. In addition or alternatively to detecting input 610x, device 600 detects input 610w selecting spacebar 616c in FIG. 6S. In response to detecting input 610u, device 600 displays draft message 631 in message compose field 612 with the suggested visual effect applied to both first word 631a and second word 631b. In some embodiments, in response to detecting input 610u, device 600 maintains display of first word 631a and second word 631b in message compose field 612 without applying the visual effect. In some embodiments, the visual effect is applied to the combination of first word 631a and second word 631b as a whole (e.g., as opposed to the visual effect being applied to each word individually and/or independently).

In some embodiments, device 600 provides a suggested visual effect based on a placement and/or pattern of one or more characters. For example, in FIG. 6T, draft message 633 has been entered into message compose field 612. As entered in FIG. 6T, draft message 633 does not satisfy a set of suggested visual effect criteria. Accordingly, device 600 does not provide a suggested visual effect in FIG. 6T. In contrast, in FIG. 6U, draft message 633 includes first character 633b (e.g., "*") and second character 633c (e.g., "*") around content 633a (e.g., "HUG"). The placement and/or pattern of first character 633b and second character 633c satisfies a set of visual effect criteria that causes device 600 to provide a suggested visual effect (e.g., a squish effect) for content 633a, as shown in second content suggestion 620b in FIG. 6U. In some embodiments, device 600 displays the suggested visual effect shown in FIG. 6U for content 633a regardless of the content of content 633a (e.g., the set of suggested visual effect criteria corresponding to the squish effect in FIG. 6U is not based on content 633a). In response to detecting input 610z selecting second content suggestion 620b in FIG. 6U, device 600 displays draft message 633 in message compose field 612 with the suggested visual effect applied to content 633a (e.g., device 600 applies the suggested visual effect to content 633a in message compose field 612). In addition or alternatively to detecting input 610z, device 600 detects input 610y selecting spacebar 616c in FIG. 6U. In response to detecting input 610y, device 600 displays draft message 633 in message compose field 612 with the suggested visual effect applied to content 633a. In some embodiments, in response to detecting input 610y, device 600 maintains display of content 633a in message compose field 612 without applying the visual effect.

In some embodiments, applying a visual effect to a message includes displaying a portion of the content of the message outside an area (e.g., a visually distinguished region, such as a message bubble) associated with the message. For example, in FIG. 6V, draft message 635 has been entered into message compose field 612 and device 600 provides a suggested visual effect (e.g., an explode effect) in second content suggestion 620b for content 635a (e.g., "BLOWN"). In the embodiment illustrated in FIG. 6V, device 600 displays a representation of the suggested visual effect in second content suggestion 620b without displaying a name (e.g., "EXPLODE") and/or label of the effect (e.g., in contrast to FIGS. 6C, 6K, 6R, and 6S). In response to detecting selection of the suggested visual effect (e.g., via input 610aa selecting second content suggestion 620b) followed by a request (e.g., input 610ab selecting send button 614) to send the content (e.g., draft message 635) in message compose field 612, device 600 adds message 606e to message conversation 606 with the visual effect applied to content 635a, as shown in FIG. 6W.

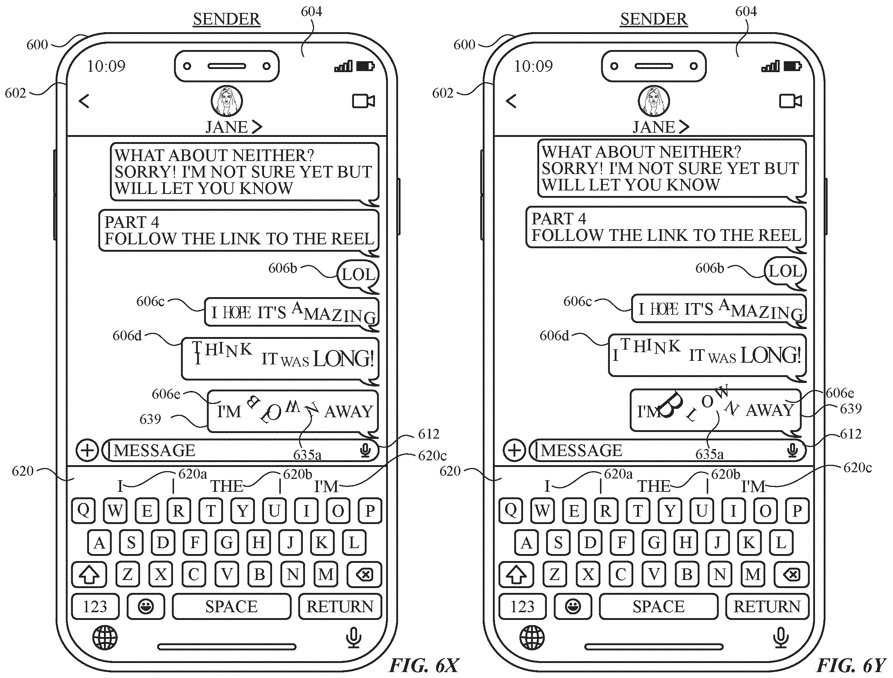

FIGS. 6W-6Y illustrate respective states of the visual effect applied to content 635a. FIG. 6W illustrates a first state of the visual effect applied to content 635a in which the characters of content 635a are displayed at different orientations. FIG. 6X illustrates a second state of the visual effect applied to content 635a in which the characters of content 635a are displayed at different orientations and are more dispersed compared to the first state illustrated in FIG. 6W. FIG. 6Y illustrates a third state of the visual effect applied to content 635a in which the characters of content 635a are displayed at different orientations and are more dispersed compared to the second state illustrated in FIG. 6X. In particular, a portion (e.g., part of the letter "W") of content 635a is displayed outside of boundary 639 of message 606e. In some embodiments, a portion (e.g., one or more letters) of content 635a (e.g., "BLOWN") cease to be displayed (e.g., disappear and/or are removed) at least temporarily (e.g., when the portion of the content moves outside boundary 639).

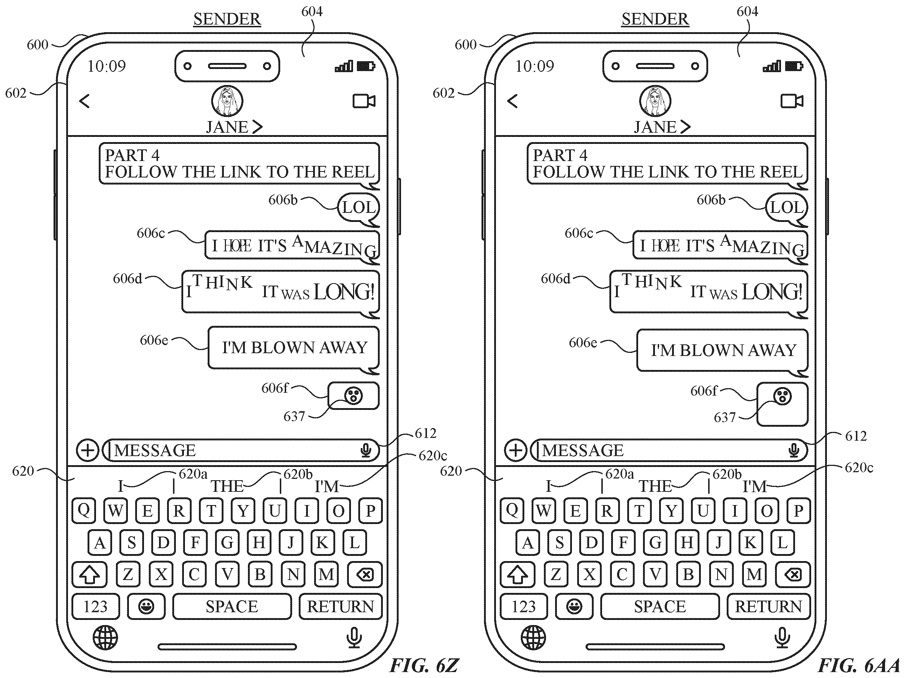

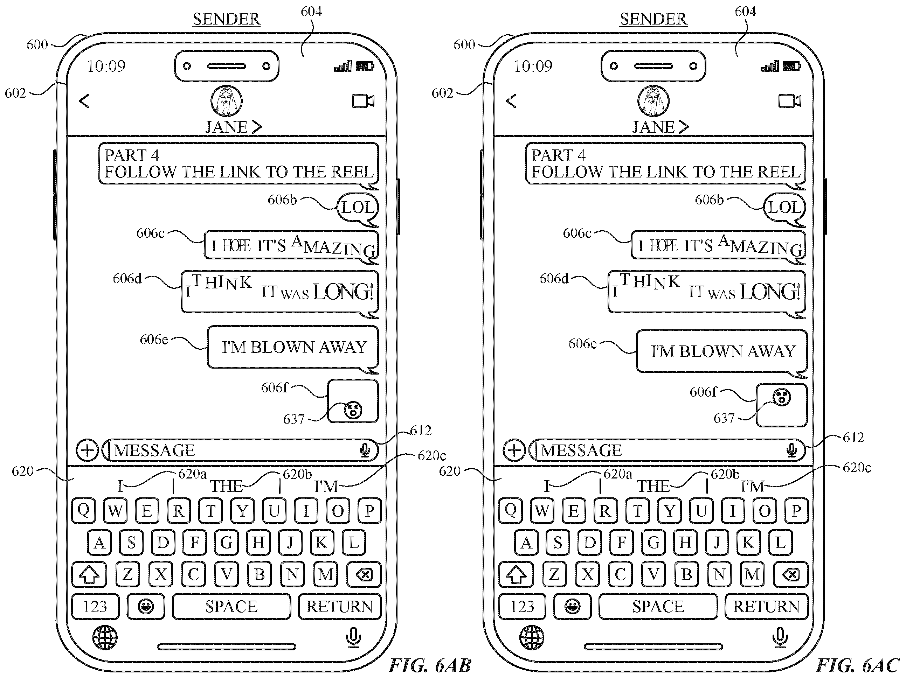

In some embodiments, a visual effect is applied to content other than text, such as, e.g., an emoji, symbol, image, and/or icon. FIGS. 6Z-6AC illustrate an example of a visual effect applied to emoji 637 in message 606f. The visual effect (e.g., a vertical shake effect) includes movement of emoji 637 up and down within message 606f. FIG. 6Z illustrates a first state of the visual effect in which emoji 637 is in the middle of message 606f. FIG. 6AA illustrates a second state of the visual effect in which emoji 637 has moved upward relative to the first state shown in FIG. 6Z and a size (e.g., height) of message 606f increases (e.g., to accommodate the visual effect so that emoji 637 remains inside the area of message 606f). FIG. 6AB illustrates a third state of the visual effect in which emoji 637 has moved down relative to the first state in FIG. 6Z and the size of message 606f remains at the same size compared to the second state in FIG. 6AA. In some embodiments, the transition from the second state to the third state includes the size of message 606f decreasing as emoji 637 moves from the second state to the first state, and then increases as emoji moves from the first state to the third state show in FIG. 6AB. FIG. 6AC illustrates a fourth state of the visual effect in which emoji 637 moves back to the same state show in FIG. 6AA (e.g., to the second state, via the first state).

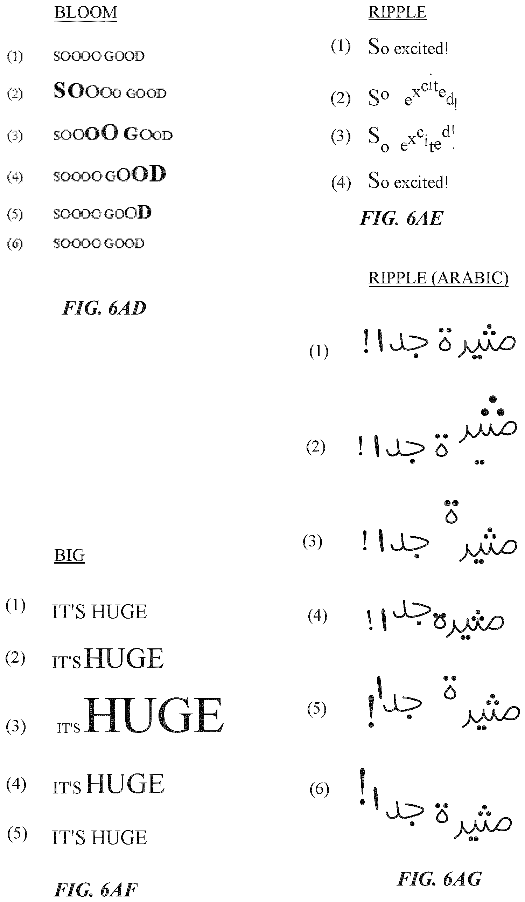

FIGS. 6AD-6AP illustrate embodiments of various visual effects. FIGS. 6AD-6AP illustrate various states of the visual effects as the visual effects progress over time from top to bottom. The numbers in parentheses to the left of the states indicate a sequence of the states over time (e.g., state (2) is displayed after state (1), and state (3) is displayed before state (4)) and are not displayed as part of the visual effects. The techniques described above in FIGS. 6A-6AC can be applied to the visual effects described in FIGS. 6AD-6AP, and the visual effects described in FIGS. 6AD-6AP can be incorporated with the techniques described above in FIGS. 6A-6AC.

FIG. 6AD illustrates an embodiment of a visual effect (e.g., a bloom effect). FIG. 6AD illustrates various states of the visual effect as the visual effect progresses over time from the top of FIG. 6AD toward the bottom of FIG. 6AD. The visual effect is applied to two words (e.g., "SO GOOD") and includes sequentially bolding and/or increasing the size of characters from left to right over time and then removing the bolding and/or decreasing the size of the characters (e.g., to their original font and/or size). In some embodiments, the visual effect illustrated in FIG. 6AD is applied to a single word or to a phrase that includes three or more words.

FIG. 6AE illustrates an embodiment of a visual effect (e.g., a left-to-right ripple effect). FIG. 6AE illustrates various states of the visual effect as the visual effect progresses over time from the top of FIG. 6AE toward the bottom of FIG. 6AE. The visual effect is applied to a phrase that includes two words (e.g., "So excited") and includes sequentially raising and then lowering the characters of the content from left to right over time to create a ripple effect. FIG. 6AE illustrates an embodiment in which applying the visual effect includes applying different transformations to different portions of the content (and/or applying a transformation to a portion of the content but not to a different portion of the content). For example, in FIG. 6AE, the letter "i" in "excited" is stretched as part of the visual effect (e.g., while other letters, such as "t" and "d", are not stretched). For example, the dot in the letter "i" separates further from the lower portion of letter "i" as the letter "i" is raised upward (e.g., the dot is further from the lower portion in state (2) than in state (1) and state (3)). In some embodiments, the visual effect illustrated in FIG. 6AE is applied to a single word or to a phrase that includes three or more words.

FIG. 6AF illustrates an embodiment of a visual effect (e.g., a big effect). FIG. 6AF illustrates various states of the visual effect as the visual effect progresses over time from the top of FIG. 6AF toward the bottom of FIG. 6AF. The visual effect is applied to a phrase that includes two words (e.g., "IT'S HUGE") and includes increasing (e.g., gradually increasing) the size of a first word (e.g., "HUGE") while concurrently reducing the size of a second word (e.g., the immediately adjacent word "IT'S") over time (e.g., in states (1)-(3)), and then reducing the size of the first word while concurrently increasing the size of the second word (e.g., to their original sizes, as shown in states (3)-(5)). In some embodiments, the visual effect illustrated in FIG. 6AF is applied to a single word or to a phrase that includes three or more words.

FIG. 6AG illustrates an embodiment of a visual effect (e.g., a right-to-left ripple effect). FIG. 6AG illustrates various states of the visual effect as the visual effect progresses over time from the top of FIG. 6AG toward the bottom of FIG. 6AG. The visual effect is applied to a content that includes a different language from the content in FIG. 6AE. Similar to the visual effect described with referent to FIG. 6AE, the visual effect includes sequentially raising and then lowering the characters of the content over time to create a ripple effect. However, because the content in FIG. 6AG includes a different language (e.g., a language with a convention that goes from right to left), the visual effect progresses in a different direction (e.g., from right to left) compared to the visual effect shown in FIG. 6AE. In some embodiments, the visual effect illustrated in FIG. 6AG is applied to a single word, a phrase that includes two words, or to a phrase that includes three or more words.

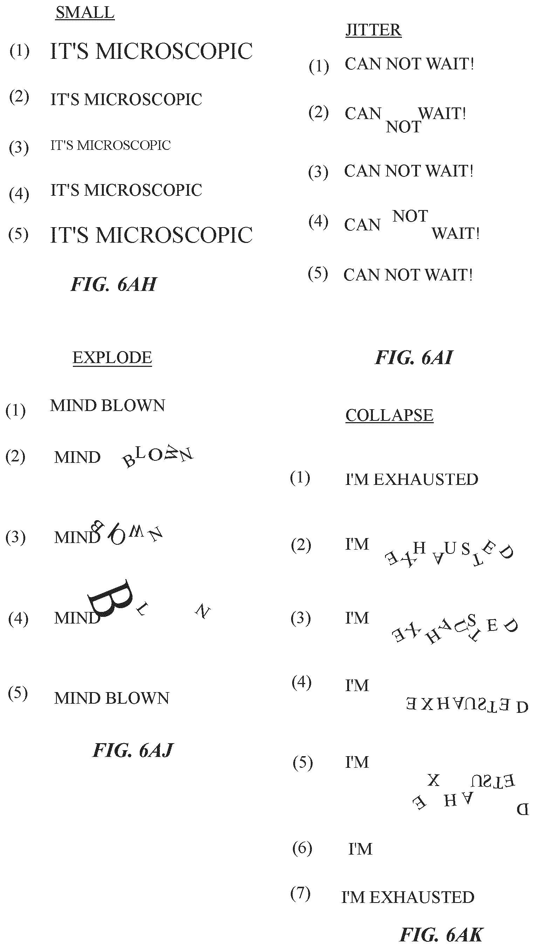

FIG. 6AH illustrates an embodiment of a visual effect (e.g., a small effect). FIG. 6AH illustrates various states of the visual effect as the visual effect progresses over time from the top of FIG. 6AH toward the bottom of FIG. 6AH. The visual effect is applied to a phrase that includes two words (e.g., "IT'S MICROSCOPIC") and includes decreasing (e.g., gradually decreasing) the size of one or more words (e.g., some or all the words of the content) over time (e.g., in states (1)-(3), and then increasing the size of the one or more words (e.g., to their original size(s), as shown in states (3)-(5)). In some embodiments, the visual effect illustrated in FIG. 6AH is applied to a single word or to a phrase that includes three or more words.

FIG. 6AI illustrates an embodiment of a visual effect (e.g., a jitter effect). FIG. 6AI illustrates various states of the visual effect as the visual effect progresses over time from the top of FIG. 6AI toward the bottom of FIG. 6AI. The visual effect includes moving at least a portion (e.g., "NOT") of the content up and down (e.g., rapidly) over time to create a jittering effect. In some embodiments, the visual effect illustrated in FIG. 6AI is applied to a single word, a phrase that includes two words, or to a phrase that includes three or more words.

FIG. 6AJ illustrates an embodiment of a visual effect (e.g., an explode effect). FIG. 6AJ illustrates various states of the visual effect as the visual effect progresses over time from the top of FIG. 6AJ toward the bottom of FIG. 6AJ. The visual effect includes changing an orientation of (e.g., rotating) different portions (e.g., different characters) of content (e.g., "BLOWN") in different directions and/or by different amounts over time. The visual effect in FIG. 6AJ also includes dispersing (e.g., increasing the distance between) the portions (e.g., characters) of the content over time to give an appearance that the content (or, in some embodiments, a portion of the content) is exploding. In some embodiments, the visual effect includes ceasing display of (e.g., removing, at least temporarily) at least a portion (e.g., one or more letters) of the content (e.g., the word "BLOWN"). For example, the letters "O" and "W" are not displayed in state (4). In some embodiments, the visual effect includes re-displaying a portion of the content that was removed (e.g., the letters "O" and "W" are re-displayed in state (5)). In some embodiments, the visual effect illustrated in FIG. 6AJ is applied to a single word, a phrase that includes two words, or to a phrase that includes three or more words.

FIG. 6AK illustrates an embodiment of a visual effect (e.g., a collapse effect). FIG. 6AK illustrates various states of the visual effect as the visual effect progresses over time from the top of FIG. 6AK toward the bottom of FIG. 6AK. The visual effect includes changing an orientation of (e.g., rotating) different portions (e.g., different characters) of the content (e.g., "EXHAUSTED") around respective points (e.g., points of rotation) over time. In the embodiment illustrated in FIG. 6AJ, the portions of the content are rotated around their respective points of rotation until they are upside down (e.g., compared to an initial state) and then move downward (e.g., as if they are falling away). In some embodiments, the content (or a portion of the content) moves off a bottom edge of a message region (e.g., a message bubble) and/or ceases to be displayed (e.g., is temporarily removed). For example, the word "EXHAUSTED" is not displayed in state (6). In some embodiments, after moving off a bottom edge of the message region, the content (or portion of the content) is re-displayed (e.g., at an initial position, as shown with the word "EXHAUSTED" in state (7)). In some embodiments, the visual effect illustrated in FIG. 6AK is applied to a single word, a phrase that includes two words, or to a phrase that includes three or more words.

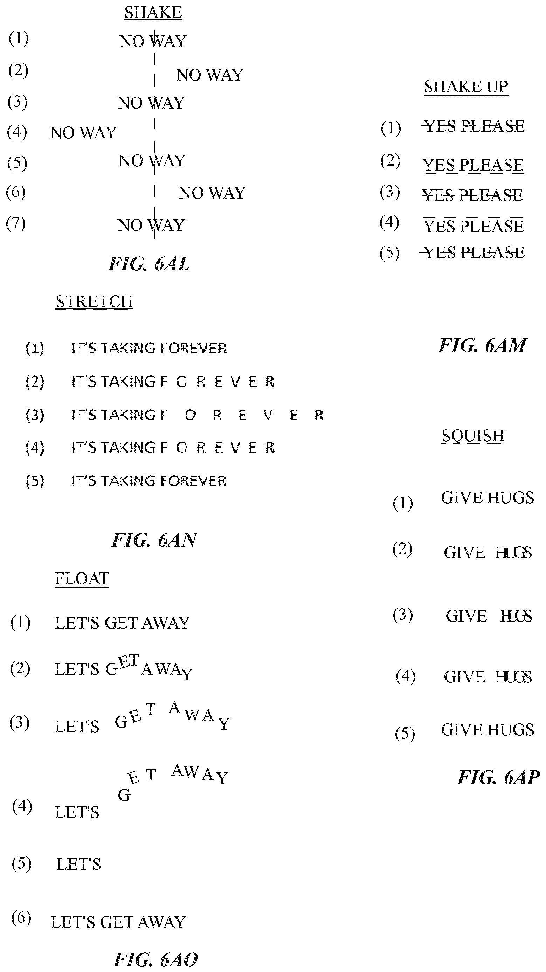

FIG. 6AL illustrates an embodiment of a visual effect (e.g., a horizontal shake effect). FIG. 6AL illustrates various states of the visual effect as the visual effect progresses over time from the top of FIG. 6AL toward the bottom of FIG. 6AL. The visual effect includes changing a position of the content in a first direction (e.g., from left to right) and then in an opposite direction (e.g., from right to left) over time to create an appearance that the content is shaking. The dashed vertical line represents a reference position and is not displayed as part of the visual effect. In some embodiments, the visual effect illustrated in FIG. 6AL is applied to a single word, a phrase that includes two words (e.g., the two words are moved concurrently in the same direction and by the same amount), or to a phrase that includes three or more words (e.g., the three or more words are moved concurrently in the same direction and by the same amount).

FIG. 6AM illustrates an embodiment of a visual effect (e.g., a vertical shake effect). FIG. 6AM illustrates various states of the visual effect as the visual effect progresses over time from the top of FIG. 6AM toward the bottom of FIG. 6AM. The visual effect includes changing a position of the content in a first direction (e.g., up) and then in an opposite direction (e.g., down) over time to create an appearance that the content is shaking. The dashed horizontal line represents a reference position and is not displayed as part of the visual effect. In some embodiments, the visual effect illustrated in FIG. 6AM is applied to a single word, a phrase that includes two words (e.g., the two words are moved concurrently in the same direction and by the same amount), or to a phrase that includes three or more words (e.g., the three or more words are moved concurrently in the same direction and by the same amount).

FIG. 6AN illustrates an embodiment of a visual effect (e.g., a stretch effect). FIG. 6AN illustrates various states of the visual effect as the visual effect progresses over time from the top of FIG. 6AN toward the bottom of FIG. 6AN. The visual effect includes increasing (e.g., as shown in states (1)-(3)) the distance and/or spacing between portions (e.g., characters) of content (e.g., the word "FOREVER") and then reducing (e.g., as shown in states (3)-(5)) the distance and/or spacing between the portion of the content (e.g., back to their starting distance and/or spacing) over time. In some embodiments, the portions of the content are moved along a line to give an appearance that the content is stretching and/or contracting over time. In some embodiments, the visual effect illustrated in FIG. 6AN is applied to a single word, a phrase that includes two words, or to a phrase that includes three or more words.

FIG. 6AO illustrates an embodiment of a visual effect (e.g., a float effect). FIG. 6AO illustrates various states of the visual effect as the visual effect progresses over time from the top of FIG. 6AO toward the bottom of FIG. 6AO. The visual effect includes moving (e.g., gradually moving) content (e.g., the words "GET AWAY") upward over time to give an appearance that the content is floating (e.g., as shown in states (1)-(5)). In some embodiments, after moving upward, the content moves (e.g., gradually moves) downward (e.g., back to an initial position, as shown in state (6)). In some embodiments, the content moves off a top edge of a message region (e.g., as shown in state (5)) and then is re-displayed (e.g., re-appears at an initial position, as shown in state (6)). In some embodiments, the visual effect illustrated in FIG. 6AO is applied to a single word, a phrase that includes two words, or to a phrase that includes three or more words.

FIG. 6AP illustrates an embodiment of a visual effect (e.g., a squish effect). FIG. 6AP illustrates various states of the visual effect as the visual effect progresses over time from the top of FIG. 6AP toward the bottom of FIG. 6AP. In some embodiments, the visual effect includes decreasing (e.g., as shown in states (1)-(3)) the distance and/or spacing between portions (e.g., characters) of content (e.g., the word "HUGS") and then increasing (e.g., as shown in states (3)-(5)) the distance and/or spacing between the portion of the content (e.g., back to their starting distance and/or spacing) over time. In some embodiments, a size (e.g., width) of portions (e.g., characters) of the content is decreased and then increased over time. In some embodiments, the portions of the content are moved along a horizontal line and/or the width of the portions of the content is reduced to give an appearance that the content is being squished or squeezed over time. In some embodiments, the visual effect includes changing a color and/or opacity of a portion of the content (e.g., an end of the content, such as the "H" and/or the "S" in "HUGS"). In some embodiments, the visual effect illustrated in FIG. 6AP is applied to a single word, a phrase that includes two words, or to a phrase that includes three or more words.

FIG. 7 is a flow diagram illustrating a method for providing visual effects for messages using a computer system in accordance with some embodiments. Method 700 is performed at a computer system (e.g., 100, 300, 500, 600, and/or 650) (e.g., a smart phone, a smart watch, a tablet computer, a laptop computer, a desktop computer, a wearable device, and/or a head-mounted device (e.g., a head-mounted augmented reality and/or extended reality device)) that is in communication with (e.g., includes and/or is connected to) one or more display generation components (e.g., 112, 340, 504, 602, and/or 652) (e.g., one or more displays, display devices, touch-screen displays, monitors, projectors, a holographic display system, and/or a head-mounted display system). In some embodiments, the computer system is in communication with one or more input devices (e.g., 112, 350, 355, 508, 522, 602, and/or 652) (e.g., a touch-sensitive surface (e.g., a touch-sensitive display); a mouse; a keyboard; a remote control; a visual input device (e.g., one or more cameras such as, e.g., an infrared camera, a depth camera, a visible light camera, and/or a gaze tracking camera); an audio input device (e.g., a microphone); a biometric sensor (e.g., a fingerprint sensor, a face identification sensor, a gaze tracking sensor, and/or an iris identification sensor); and/or one or more mechanical input devices (e.g., a depressible input mechanism; a button; a rotatable input mechanism; a crown; and/or a dial)). Some operations in method 700 are, optionally, combined, the orders of some operations are, optionally, changed, and some operations are, optionally, omitted.

As described below, method 700 provides an intuitive way for providing visual effects for messages. The method reduces the cognitive burden on a user for providing visual effects for messages, thereby creating a more efficient human-machine interface. For battery-operated computing devices, enabling a user to send and/or receive messages that include visual effects faster and more efficiently conserves power and increases the time between battery charges.

According to some embodiments of method 700, the computer system displays (702), via the one or more display generation components, a messaging user interface (e.g., 604 and/or 654) that includes a message conversation (e.g., 606) (e.g., a message transcript and/or a conversation transcript) between a first participant (e.g., a user and/or account associated with the computer system) and one or more other participants (e.g., users and/or accounts other than the first participant), the message conversation including one or more messages (e.g., 606a, 606b, 606c, 606d, 606e, and/or 606f) between the first participant and the one or more other participants (e.g., one or more messages sent by the first participant to the one or more other participants and/or one or more messages sent by one of the one or more other participants to the first participant), wherein the one or more messages include a first message (e.g., 606a, 606b, 606c, 606d, 606e, and/or 606f) that includes first content (e.g., 625, 627, 631, 633, 635, 637, and/or a portion thereof) (e.g., text, one or more characters, one or more words, one or more images, one or more emojis, and/or other content) and second content (e.g., 625, 627, 629, 631, 633, 635, 637, and/or a portion thereof) (e.g., text, one or more characters, one or more words, one or more images, one or more symbols, one or more emojis, and/or other content) that is different (e.g., separate and/or distinct) from the first content. In some embodiments, the first content and the second content are mutually exclusive. While displaying the messaging user interface, the computer system displays (704), via the one or more display generation components, the first message (e.g., in the message conversation and/or in a message conversation region of the messaging user interface), including: displaying (706) the first content with a first visual effect (e.g., one or more of the effects described with reference to FIGS. 6AD-6AP) (e.g., an animated visual effect, an animation, and/or a visual effect that changes an appearance of the first content over time) applied to the first content (e.g., the computer system applies the first visual effect to the first content, displays the first visual effect applied to the first content, displays a visual effect that includes the first content, and/or animates the first content in a first manner); and displaying (708) (e.g., concurrently with the first content) the second content without the first visual effect applied to the second content (e.g., the second content is not included in the first visual effect; the computer system applies the first visual effect to the first content without applying the first visual effect to the second content; and/or the computer system displays an animation that includes animating the first content in a first manner without animating the second content in the first manner (e.g., the second content is not animated or is not animated in the same manner as the first content)) (e.g., in message 606c shown in FIG. 6J, a visual effect is not applied to "I" and "IT'S"). Displaying the first content with a first visual effect applied to the first content and displaying the second content without the first visual effect applied to the second content enables the computer system to selectively emphasize certain portions of the first message, thereby providing improved visual feedback to the user.

In some embodiments, the messaging user interface includes a text messaging user interface, an instant messaging user interface, and/or a user interface of a messaging application such as a text messaging application and/or an instant messaging application. In some embodiments, the messaging user interface includes a user interface of a messaging application, function, and/or feature included in an audio and/or video communication application, such as a chat user interface in a videoconferencing application. In some embodiments, the messaging user interface includes a first region (e.g., a conversation region and/or a messages region). In some embodiments, the message conversation (e.g., including the one or more messages between the first participant and the one or more other participants) is displayed in the first region of the messaging user interface. In some embodiments, the messaging user interface includes a keyboard (e.g., a soft keyboard and/or a digital keyboard). In some embodiments, the first message is displayed in the first region of the messaging user interface. In some embodiments, the messaging user interface includes a message compose field. In some embodiments, a message can be composed by entering content (e.g., a draft message) into the message compose field (e.g., prior to sending the message). In some embodiments, the computer system enters (e.g., displays) content into the message compose field in response to detecting a set of one or more inputs (e.g., manual inputs directed to the keyboard and/or verbal inputs). In some embodiments, the messaging user interface includes a selectable user interface element (e.g., a send button and/or send option) for adding a message to the message conversation. For example, in some embodiments, in response to detecting selection of the user interface element, the computer system sends a message to the one or more other participants in the message conversation (e.g., adds a message to the message conversation). In some embodiments, the message includes the content of the message compose field at the time selection of the selectable user interface element is detected.

In some embodiments, displaying the second content without the first visual effect applied to the second content includes adjusting a visual property of the second content (e.g., in message 606d shown in FIG. 6Q, a size of "WAS" is reduced due to the visual effect applied to "LONG" even though a visual effect is not applied to "WAS"). In some embodiments, the second content is adjacent (e.g., immediately adjacent) to the first content (e.g., the second content includes a character and/or a word that is immediately adjacent to a character and/or a word of the first content). In some embodiments, the second content is separated from the first content only by a space character. In some embodiments, adjusting a visual property of the second content includes: moving the second content; changing a position of the second content, reducing a size of (e.g., shrinking) the second content; increasing a size of (e.g., enlarging) the second content, changing (e.g., increasing and/or decreasing) a transparency of the second content; changing (e.g., increasing and/or decreasing) a visibility of the second content, changing (e.g., increasing and/or decreasing) a spacing between element (e.g., characters and/or symbols) of the second content (e.g., squeezing letters of a word closer together and/or stretching letters of a word farther apart). Adjusting a visual property of the second content enables the computer system to more clearly display the first visual effect applied to the first content (e.g., such that the second content does not interfere with display of the first visual effect applied to the first content) without requiring a user to manually adjust the second content, thereby providing improved visual feedback to the user and reducing the number of inputs needed to perform an operation.

In some embodiments, displaying the second content without the first visual effect applied to the second content includes displaying the second content with a second visual effect (e.g., an animated visual effect, an animation, and/or a visual effect that changes an appearance of the second content over time) applied to the second content (e.g., the computer system applies the second visual effect to the second content, displays the second visual effect applied to the second content, displays a visual effect that includes the second content, and/or animates the second content in a second manner), wherein the second visual effect is different from the first visual effect (e.g., the size of a first word is increases and the size of a second word is reduced). For example, in message 606d shown in FIG. 6Q, a first visual effect is applied to "THINK" and a second, different effect is applied to "LONG". Displaying the second content with a second (different) visual effect applied to the second content enables the computer system to selectively apply different visual effects to different portions of the first message to emphasize and/or distinguish the different portions (e.g., independently), thereby providing improved visual feedback to the user.

In some embodiments, prior to displaying the first message (e.g., before the first message is sent and/or before the first message is included in the message conversation), the computer system displays, via the one or more display generation components, a preview of the first content with the first visual effect applied to the first content (e.g., the computer system displays a preview of the first visual effect applied to the first content) (e.g., in FIG. 6N, device 600 displays a preview of the visual effects applied to content 627a and content 627b in message compose field 612). In some embodiments, the computer system displays the preview of the first content with the first visual effect in a region of the messaging user interface for entering and/or composing a message (e.g., a message compose field and/or a message entry field). In some embodiments, the region of the messaging user interface for entering and/or composing a message is visually distinct (e.g., visually separated) from the message conversation. Displaying a preview of the of the first content with the first visual effect applied to the first content enables the user to more easily decide whether to have the first visual effect applied to the first content and avoid additional inputs to remove and/or edit the first visual effect from the first message, thereby providing improved visual feedback to the user and reducing the number of inputs needed to perform an operation.

In some embodiments, displaying the first content with the first visual effect applied to the first content includes: displaying a first instance of the first content with the first visual effect applied to the first content (e.g., the computer system displays a first instance of the first visual effect applied to the first content) (e.g., 606d displayed on device 600 in FIG. 6Q); and after displaying the first instance of the first content with the first visual effect applied to the first content (e.g., after displaying the first instance of the first content with the first visual effect applied to the first content is completed), displaying (e.g., automatically and/or without detecting further user input) a second instance of the first content with the first visual effect applied to the first content (e.g., the computer system loops and/or repeats display of the first visual effect applied to the first content) (e.g., 606d displayed on device 600 in FIG. 6R). Displaying a first instance of the first content with the first visual effect applied to the first content followed by a second instance of the first content with the first visual effect applied to the first content enables the computer system to repeatedly display the first visual effect applied to the first content without requiring the user to manually initiate additional instances of the first visual effect and makes the first visual effect easier to observe, thereby providing improved visual feedback to the user and reducing the number of inputs needed to perform an operation.

**In** some embodiments, after displaying the first content with the first visual effect applied to the first content (e.g., in the first message or in a preview of the first message prior to the first message being sent), the computer system detects, via one or more input devices that are in communication with the computer system, a set of one or more inputs (e.g., 610d, 610f, 610g, 610h, 610m, 610n, 610l, and/or 610o) (e.g., a set of one or more touches, air gestures, button presses, voice commands, and/or other inputs) corresponding to a request to edit (e.g., remove and/or change) the first visual effect; and in response to detecting the set of one or more inputs corresponding to the request to edit the first visual effect, the computer system displays (e.g., in the first message or in a preview of the first message), via the one or more display generation components, the first content without the first visual effect applied to the first content (e.g., the first visual effect is removed from the first content in response to detecting the set of one or more inputs). In some embodiments, the set of one or more inputs includes one or more button presses (e.g., on a physical keyboard and/or mouse), contacts on a touch-sensitive surface (e.g., on a soft keyboard and/or user interface menu), air gestures, eye gestures, and/or voice inputs (e.g., voice to text inputs). Displaying the first content without the first visual effect applied to the first content in response to a request to edit the first visual effect after displaying the first content with the first visual effect applied to the first content enables the user to customize the first message quickly and efficiently, thereby providing improved visual feedback to the user and reducing the number of inputs needed to perform an operation.

**In** some embodiments, displaying the first content with the first visual effect applied to the first content includes: animating (e.g., displaying an animation of) a first portion of the first content (e.g., in a first manner); and after animating the first portion of the first content, animating (e.g., displaying an animation of) a second portion of the first content (e.g., in the first manner (the same manner as the first portion) at a different time), wherein the second portion of the first content is different from the first portion of the first content (e.g., the computer system animates portions of the first content sequentially over time) (e.g., as shown in FIGS. 6AD, 6AE, 6AG, and/or 6AI). In some embodiments, displaying the first visual effect includes animating portions of the first content sequentially over time. In some embodiments, the first portion and the second portion are animated to create a wave-like appearance and/or a ripple appearance. In some embodiments, first portion and the second portion are animated pseudo-randomly to create a jittering effect. Animating different portions of the first content at different times enables the computer system to provide a greater variety of visual effects, makes the visual effect more noticeable, and enables the computer system to animate multiple portions of the first content without requiring the user to provide additional inputs to edit different portions of the first content individually, thereby providing improved visual feedback to the user and reducing the number of inputs needed to perform an operation.

In some embodiments, displaying the first content with the first visual effect applied to the first content includes changing a font of the first content over time (e.g., as shown in FIGS. 6AD, 6AL, 6AM, and/or 6AP). In some embodiments, changing the font of the first content includes changing (e.g., increasing and/or decreasing) a font size of at least a portion of the first content, changing a bolding (e.g., from bold to not bold and/or from not bold to bold) of at least a portion of the first content, changing a font type of at least a portion of the first content, changing a color of at least a portion of the first content, and/or changing an opacity of at least a portion of the first content. Changing a font of the first content over time enables the computer system to vary the font of the first content without requiring the user to provide additional inputs to change the font at different times, thereby providing improved visual feedback to the user and reducing the number of inputs needed to perform an operation.

In some embodiments, displaying the first content with the first visual effect applied to the first content includes changing (e.g., increasing and/or decreasing) a spacing between two or more characters of the first content over time (e.g., stretching apart and/or squeezing together the characters of one or more words) (e.g., as shown in FIGS. 6AN and/or 6AP). Changing a spacing between two or more characters of the first content over time enables the computer system to vary the spacing of the first content without requiring the user to provide additional inputs to change the spacing at different times, thereby providing improved visual feedback to the user and reducing the number of inputs needed to perform an operation.

In some embodiments, displaying the first content with the first visual effect applied to the first content includes: at a first time, displaying the first content within a visually distinguished region of the messaging user interface (e.g., within a message bubble in the message conversation); and at a second time different from the first time (e.g., before or after the first time), displaying at least a portion of the first content at least partially outside the visually distinguished region of the messaging user interface (e.g., the first visual effect includes moving one or more characters of the first content from inside a message bubble to outside the message bubble) (e.g., as shown in FIGS. 6X and 6Y). In some embodiments, the first visual effect includes moving one or more characters of the first content from inside a message bubble to outside the message bubble without moving the message bubble (e.g., without changing a position and/or size of the message bubble). In some embodiments, the first visual effect includes moving the message bubble (e.g., changing a position and/or size of the message bubble). Displaying at least a portion of the first content at least partially outside the visually distinguished region of the messaging user interface enables the computer system to provide a greater variety of visual effects (e.g., without being confined to the visually distinguished region of the messaging user interface) and makes the visual effect more noticeable, thereby providing improved visual feedback to the user.

In some embodiments, displaying the first content with the first visual effect applied to the first content includes: at a first time, displaying the first message including a first portion of the first content (e.g., the first portion is displayed prior to being removed); and at a second time different from the first time (e.g., before or after the first time), displaying the first message without the first portion (e.g., all or some but less than all) of the first content (e.g., the first portion of the first content at least temporarily ceases to be displayed, is removed, and/or appears to disappear) (e.g., as described with reference to FIGS. 6Y, 6AJ, and/or 6AK). In some embodiments, the first portion is re-displayed after being removed. Displaying the first message with a first portion at a first time and without the first portion at a different time enables the computer system to provide a greater variety of visual effects, makes the visual effect more noticeable, and enables the computer system to remove portions of the first content at certain times without requiring the user to provide additional inputs to edit different portions of the first content individually, thereby providing improved visual feedback to the user and reducing the number of inputs needed to perform an operation.

In some embodiments, the first content includes a first character (e.g., the letter "X" in FIG. 6AE) and a second character (e.g., the letter "i" in FIG. 6AE) different from the first character, and displaying the first content with the first visual effect applied to the first content includes: displaying a first visual transformation (e.g., change in position, change in size, change in color, changes in font, a shift, a rotation, an expansion, and/or a contraction) on the first character (e.g., the letter "X" in FIG. 6AE is translated but does not change shape and/or size); and displaying a second visual transformation (e.g., change in position, change in size, change in color, changes in font, a shift, a rotation, an expansion, and/or a contraction) on the second character, wherein the second visual transformation is different (e.g., in magnitude, direction, and/or style) from the first visual transformation (e.g., the dot in the letter "i" in FIG. 6AE separates from the line or lower portion of the "i" while being translated upward). Displaying a first visual transformation on a first character and a different visual transformation on a different character enables the computer system to provide a greater variety of visual effects, makes the visual effect more noticeable, and enables the computer system to treat different portions of the first content in different manners without requiring the user to provide additional inputs to edit different portions of the first content individually, thereby providing improved visual feedback to the user and reducing the number of inputs needed to perform an operation.

In some embodiments, displaying the first content with the first visual effect applied to the first content includes: in accordance with a determination that the first content (or, in some embodiments, the first message) corresponds to (e.g., is in and/or includes) a first language (e.g., English or Spanish), displaying the first content with the first visual effect applied to the first content according to a first characteristic (e.g., in a first direction, at a first rate, and/or with a first magnitude) (e.g., as shown in FIG. 6AE); and in accordance with a determination that the first content (or, in some embodiments, the first message) corresponds to (e.g., is in and/or includes) a second language (e.g., Arabic or Hebrew) that is different from the first language, displaying the first content with the first visual effect applied to the first content according to a second characteristic that is different from the first characteristic (e.g., the first visual effect is applied in a different direction, at a different rate, and/or with a different magnitude than when the first content corresponds to the first language) (e.g., as shown in FIG. 6AG). Applying the first visual effect to the first content according to different characteristics based on the language of the first content enables the computer system to make the first visual effect compatible with different languages and to adjust the first visual effect based on the language without requiring the user to manually change the first visual effect to adapt to different languages, thereby providing improved visual feedback to the user, reducing the number of inputs needed to perform an operation, and performing an operation when a set of conditions has been met without requiring further user input.

Note that details of the processes described above with respect to method 700 (e.g., FIG. 7) are also applicable in an analogous manner to the methods described below. For example, method 800 optionally includes one or more of the characteristics of the various methods described above with reference to method 700. For example, a message can be displayed with a visual effect applied to content of the message as described in method 700, where the visual effect corresponds to the representation of the visual effect provided in method 800 in accordance with a determination that the content satisfies a set of visual effect suggestion criteria. For brevity, these details are not repeated below.

FIG. 8 is a flow diagram illustrating a method for providing visual effects for messages using a computer system in accordance with some embodiments. Method 800 is performed at a computer system (e.g., 100, 300, 500, 600, and/or 650) (e.g., a smart phone, a smart watch, a tablet computer, a laptop computer, a desktop computer, a wearable device, and/or a head-mounted device (e.g., a head-mounted augmented reality and/or extended reality device)) that is in communication with (e.g., includes and/or is connected to) one or more display generation components (e.g., 112, 340, 504, 602, and/or 652) (e.g., one or more displays, display systems, touch-screen displays, monitors, a holographic display system, and/or a head-mounted display system) and one or more input devices (e.g., 112, 350, 355, 508, 522, 602, and/or 652) (e.g., a touch-sensitive surface (e.g., a touch-sensitive display); a mouse; a keyboard; a remote control; a visual input device (e.g., one or more cameras such as, e.g., an infrared camera, a depth camera, a visible light camera, and/or a gaze tracking camera); an audio input device (e.g., a microphone); a biometric sensor (e.g., a fingerprint sensor, a face identification sensor, a gaze tracking sensor, and/or an iris identification sensor); and/or one or more mechanical input devices (e.g., a depressible input mechanism; a button; a rotatable input mechanism; a crown; and/or a dial)). Some operations in method 800 are, optionally, combined, the orders of some operations are, optionally, changed, and some operations are, optionally, omitted.

As described below, method 800 provides an intuitive way for providing visual effects for messages. The method reduces the cognitive burden on a user for providing visual effects for messages, thereby creating a more efficient human-machine interface. For battery-operated computing devices, enabling a user to send and/or receive messages that include visual effects faster and more efficiently conserves power and increases the time between battery charges.

According to some embodiments of method 800, the computer system displays (802), via the one or more display generation components, a messaging user interface (e.g., 604 and/or 654). While displaying the messaging user interface, detecting (804), via the one or more input devices, a set of one or more inputs (e.g., 610a,610b, 610j, and/or 610s) (e.g., a set of one or more touches, air gestures, button presses, voice commands, and/or other inputs) corresponding to selection of first content (e.g., 625, 627, 629, 631, 633, 635, 637, and/or a portion thereof) (e.g., text, one or more characters, one or more words, one or more images, one or more symbols, one or more emojis, and/or other content) for a message (e.g., a text message and/or an instant message). In some embodiments, the set of one or more inputs includes one or more button presses (e.g., on a physical keyboard and/or mouse), contacts on a touch-sensitive surface (e.g., on a soft keyboard and/or user interface menu), air gestures, eye gestures, and/or voice inputs (e.g., voice to text inputs). In response (806) to detecting the set of one or more inputs corresponding to selection of the first content for the message: in accordance with a determination that the first content satisfies a first set of visual effect suggestion criteria (e.g., a set of criteria for suggesting a first visual effect to apply to at least a portion of the first content), the computer system provides (808) (e.g., outputting and/or displaying) a representation (e.g., 620b in FIGS. 6C, 6D, 6E, 6K, 6R, 6S, 6U, and/or 6V) of a first visual effect (e.g., one or more of the effects described with reference to FIGS. 6AD-6AP) (e.g., a suggested visual effect, an animated visual effect, an animation, and/or a visual effect that changes an appearance of content over time) for (e.g., corresponding to and/or that can be applied to) a respective portion (e.g., 625a, 625b, 627a, 627b, 629a, 631a, 631b, 633a, 635a, and/or 637) (e.g., all or some but not all) of the first content. In some embodiments, in accordance with a determination that the first content does not satisfy the first set of visual effect suggestion criteria, the computer system forgoes providing the representation of the first visual effect (e.g., displays a representation of a different suggested visual effect or does not display any representation of a suggested visual effect). In some embodiments, the representation of the first visual effect includes text, an icon, a button, an affordance, a selectable option, a selectable user interface element, a user-interactive graphical user interface element, a graphic, an image, and/or an animation. In some embodiments, the representation of the first visual effect includes the respective portion of the first content (e.g., with the first visual effect applied to the respective portion of the first content). Providing a representation of a first visual effect in response to detecting selection of content for a message and in accordance with a determination that the content satisfies a set of suggestion criteria enables the computer system to selectively suggest a visual effect for a portion of the content based on the content that is selected for the message (e.g., when a visual effect is likely to be relevant to the selected content) without requiring the user to provide additional inputs to request a suggestion, thereby providing improved visual feedback to the user, reducing the number of inputs needed to perform an operation, providing additional control options without cluttering the user interface with additional displayed controls, and performing an operation when a set of conditions has been met without requiring further user input.

**In** some embodiments, the messaging user interface includes a message conversation between a first participant (e.g., a user and/or account associated with the computer system) and one or more other participants (e.g., users and/or accounts other than the first participant). **In** some embodiments, the message conversation includes one or more messages between the first participant and the one or more other participants. **In** some embodiments, the messaging user interface includes a text messaging user interface, an instant messaging user interface, and/or a user interface of a messaging application such as a text messaging application and/or an instant messaging application. **In** some embodiments, the messaging user interface includes a user interface of a messaging application, function, and/or feature included in an audio and/or video communication application, such as a chat user interface in a videoconferencing application. In some embodiments, the messaging user interface includes a first region (e.g., a conversation region and/or a messages region). In some embodiments, the message conversation (e.g., including one or more messages between the first participant and the one or more other participants) is displayed in the first region of the messaging user interface. In some embodiments, the messaging user interface includes a keyboard (e.g., a soft keyboard and/or a digital keyboard). In some embodiments, the first message is displayed in the first region of the messaging user interface. In some embodiments, the messaging user interface includes a message compose field. In some embodiments, a message can be composed by entering content (e.g., a draft message) into the message compose field (e.g., prior to sending the message). In some embodiments, the computer system enters (e.g., displays) content into the message compose field in response to detecting a set of one or more inputs (e.g., manual inputs directed to the keyboard and/or verbal inputs). In some embodiments, the messaging user interface includes a selectable user interface element (e.g., a send button and/or send option) for adding a message to the message conversation. For example, in some embodiments, in response to detecting selection of the user interface element, the computer system sends a message to the one or more other participants in the message conversation (e.g., adds a message to the message conversation). In some embodiments, the message includes the content of the message compose field at the time selection of the selectable user interface element is detected.

In some embodiments, the first set of visual effect suggestion criteria includes a text criterion that is based on text of the first content (e.g., as described with reference to FIG. 6C, 6K, 6R, and/or 6S). In some embodiments, the first set of visual effect suggestion criteria is satisfied when the text of the first content satisfies the text criterion (e.g., the text criterion is sufficient to satisfy the first set of visual effect suggestion criteria). In some embodiments, the first set of visual effect suggestion criteria is satisfied only if the text of the first content satisfies the text criterion (e.g., the text criterion is necessary to satisfy the first set of visual effect suggestion criteria). In some embodiments, the text criterion is not sufficient to satisfy the first set of visual effect suggestion criteria (e.g., the first set of visual effect suggestion criteria includes one or more criteria other than the text criterion). In some embodiments, the first set of visual effect suggestion criteria includes a text criterion that is based on a semantic meaning of text of the first content (e.g., the computer system provides a representation of a visual effect for at least a portion of the first content based on a determined meaning of the text of the first content as a whole). For example, in response to selection of text "I need it now", the computer system provides a representation of a visual effect for the word "now" (e.g., based on the meaning of "I need it now" as a whole). Conditionally providing a representation of a first visual effect based at least in part on the text of the first content enables the computer system to selectively suggest a visual effect for a portion of the content based on text selected for the message (e.g., when a visual effect is likely to be relevant to the selected text) without requiring the user to provide additional inputs to request a suggestion, thereby providing improved visual feedback to the user, reducing the number of inputs needed to perform an operation, providing additional control options without cluttering the user interface with additional displayed controls, and performing an operation when a set of conditions has been met without requiring further user input. In some embodiments, the text criterion is satisfied when the text of the first content includes a predefined text string (e.g., a keyword, a key phrase, and/or a text string, such as a word, phrase, or abbreviation, from a predefined and/or enumerated list of text strings) (e.g., "AMAZING: in FIG. 6C, "LONG" in FIG. 6K, "SCRAED" in FIG. 6R, and/or "SO GOOD" in FIG. 6S). For example, in some embodiments, the computer system provides the representation of the first visual effect at least in part because the first content includes a predefined text string. Conditionally providing a representation of a first visual effect based at least in part on the text of the first content including a predefined text string enables the computer system to selectively suggest a visual effect for certain text strings (e.g., when a visual effect is likely to be relevant to the text string) without requiring the user to provide additional inputs to request a suggestion, thereby providing improved visual feedback to the user, reducing the number of inputs needed to perform an operation, providing additional control options without cluttering the user interface with additional displayed controls, and performing an operation when a set of conditions has been met without requiring further user input. In some embodiments, the text criterion is satisfied when the text of the first content includes one or more predefined characters (e.g., an exclamation mark, a tilde, punctuation (such as one or more periods, commas, and/or parentheses), one or more asterisk, and/or one or more predefined character in a predefined position in the text of the first content, such as an exclamation point at an end of a word, a tilde at an end of a sentence, and/or text between two asterisks) (e.g., "!" in FIG. 6L and/or "*" in FIG. 6U). For example, in some embodiments, the computer system provides the representation of the first visual effect at least in part because the first content includes one or more predefined characters. Conditionally providing a representation of a first visual effect based at least in part on the text of the first content including predefined characters enables the user to quickly and efficiently cause the computer system to provide a representation of a visual effect without additional inputs to navigate the user interface (e.g., by using a shortcut and/or special characters), thereby providing improved visual feedback to the user, reducing the number of inputs needed to perform an operation, providing additional control options without cluttering the user interface with additional displayed controls, and performing an operation when a set of conditions has been met without requiring further user input. In some embodiments, the text criterion is satisfied when the text of the first content includes a predefined pattern (e.g., one or more spaces between letters within a word and/or at least a threshold number of repeated characters) (e.g., the pattern of the asterisks in FIG. 6U). For example, in some embodiments, the computer system provides the representation of the first visual effect at least in part because the text of the first content includes a predefined pattern. Conditionally providing a representation of a first visual effect based at least in part on the text of the first content including a predefined pattern enables the user to quickly and efficiently cause the computer system to provide a representation of a visual effect without additional inputs to navigate the user interface (e.g., by using a shortcut and/or special pattern), thereby providing improved visual feedback to the user, reducing the number of inputs needed to perform an operation, providing additional control options without cluttering the user interface with additional displayed controls, and performing an operation when a set of conditions has been met without requiring further user input.

In some embodiments, the first set of visual effect suggestion criteria includes a formatting criterion that is based on formatting (e.g., underline, bold, italic, strikethrough, and/or casing) of the first content (e.g., the computer system provides the representation of the first visual effect at least in part because a portion of the first content is underlined, bolded, italicized, struck through, and/or capitalized). In some embodiments, the first set of visual effect suggestion criteria is satisfied when the formatting of the first content satisfies the formatting criterion (e.g., the formatting criterion is sufficient to satisfy the first set of visual effect suggestion criteria). For example, in some embodiments, device 600 displays the suggested visual effect in second content suggestion 620b in FIG. 6C at least in part because "AMAZING" is capitalized. In some embodiments, the first set of visual effect suggestion criteria is satisfied only if the formatting of the first content satisfies the formatting criterion (e.g., the formatting criterion is necessary to satisfy the first set of visual effect suggestion criteria). In some embodiments, the formatting criterion is not sufficient to satisfy the first set of visual effect suggestion criteria (e.g., the first set of visual effect suggestion criteria includes one or more criteria other than the formatting criterion). Conditionally providing a representation of a first visual effect based at least in part on the formatting of the first content enables the user to quickly and efficiently cause the computer system to provide a representation of a visual effect without additional inputs to navigate the user interface (e.g., by using a shortcut and/or emphasizing a portion of the content with formatting), thereby providing improved visual feedback to the user, reducing the number of inputs needed to perform an operation, providing additional control options without cluttering the user interface with additional displayed controls, and performing an operation when a set of conditions has been met without requiring further user input.

In some embodiments, the first set of visual effect suggestion criteria includes an emoji criterion that is satisfied when the first content includes a predefined emoji (e.g., 637). For example, in response to detecting the set of one or more inputs, the computer system provides a suggestion for a shaking effect in accordance with a determination that the first content includes an emoji of a blue cold shivering face. In some embodiments, the first set of visual effect suggestion criteria is satisfied when the first content satisfies the emoji criterion (e.g., the emoji criterion is sufficient to satisfy the first set of visual effect suggestion criteria). In some embodiments, the first set of visual effect suggestion criteria is satisfied only if the first content satisfies the emoji criterion (e.g., the emoji criterion is necessary to satisfy the first set of visual effect suggestion criteria). In some embodiments, the emoji criterion is not sufficient to satisfy the first set of visual effect suggestion criteria (e.g., the first set of visual effect suggestion criteria includes one or more criteria other than the emoji criterion). Conditionally providing a representation of a first visual effect based at least in part on an emoji included in the first content enables the computer system to selectively suggest a visual effect for a portion of the content based on an emoji selected for the message (e.g., when a visual effect is likely to be relevant to the emoji) without requiring the user to provide additional inputs to request a suggestion, thereby providing improved visual feedback to the user, reducing the number of inputs needed to perform an operation, providing additional control options without cluttering the user interface with additional displayed controls, and performing an operation when a set of conditions has been met without requiring further user input.

In some embodiments, in response to detecting the set of one or more inputs corresponding to selection of the first content for the message: in accordance with a determination that the first content satisfies a second set of visual effect suggestion criteria (e.g., a set of criteria for suggesting a second visual effect to apply to at least a portion of the first content), wherein the second set of visual effect suggestion criteria is different from the first set of visual effect suggestion criteria, the computer system provides (e.g., outputs and/or displays) a representation of a second visual effect (e.g., a suggested visual effect, an animated visual effect, an animation, and/or a visual effect that changes an appearance of content over time) for (e.g., corresponding to and/or that can be applied to) a first portion of the first content, wherein the second visual effect is different from the first visual effect (e.g., device 600 provides a representation of a ripple effect for the word "AMAZING" in FIG. 6C and a representation of a stretch effect for the word "LONG" in FIG. 6K). In some embodiments, in accordance with a determination that the first content does not satisfy the second set of visual effect suggestion criteria, the computer system forgoes providing the representation of the second visual effect (e.g., displays a representation of a different suggested visual effect or does not display any representation of a suggested visual effect). In some embodiments, the first portion of the first content is the same as the respective portion of the first content. In some embodiments, the first portion of the first content is different from the respective portion of the first content. Providing representations of different visual effects when different sets of criteria are met enables the computer system to suggest a particular visual effect based on the first content (e.g., to suggest a visual effect that is more likely to be relevant to the selected content) without requiring the user to provide additional inputs to request a suggestion, thereby providing improved visual feedback to the user, reducing the number of inputs needed to perform an operation, providing additional control options without cluttering the user interface with additional displayed controls, and performing an operation when a set of conditions has been met without requiring further user input.

In some embodiments, providing the representation of the first visual effect for the respective portion of the first content includes displaying, via the one or more display generation components, the representation of the first visual effect in a region (e.g., 620) (e.g., a suggestion bar and/or a visually distinguished region) of the messaging user interface without selecting the first visual effect (e.g., via an input directed to representation of the first visual effect) for inclusion in the message (e.g., without displaying the first visual effect in a message compose field). For example, the first visual effect is displayed in a region of the messaging user interface other than the message conversation (e.g., the message transcript; without displaying the first visual effect in the message conversation), a keyboard region, and a message compose field. In some embodiments, the computer system displays, in a portion (e.g., a left side) of the region of the messaging user interface, a representation of the respective portion of the first content without the first visual effect applied to the respective portion of the first content (e.g., the representation of the respective portion without the first visual effect can be selected to include the respective portion in a draft message without applying the first visual effect to the respective portion). In some embodiments, in response to detecting selection of the first visual effect (e.g., via selection of the representation of the first visual effect) in the region of the messaging user interface, the computer system displays (e.g., in a message compose field) the respective portion of the first content with the first visual effect applied to the respective portion of the first content. Displaying the representation of the first visual effect in a region of the messaging user interface without selecting the first visual effect for inclusion in the message enables the user to preview the first visual effect prior to the first visual effect being applied to the content selected for the message, which avoids mistakes (e.g., by not applying a visual effect that the user does not desire) and the additional inputs required to correct them, thereby providing improved visual feedback to the user, reducing the number of inputs needed to perform an operation, and providing additional control options without cluttering the user interface with additional displayed controls.

In some embodiments, after detecting the set of one or more inputs corresponding to selection of the first content for the message, the computer system displays, via the one or more display generation components, the first visual effect applied to the respective portion of the first content in a region (e.g., 612) (e.g., a message compose field and/or a visually distinguished region) of the messaging user interface for composing a draft message (e.g., the computer system displays the first visual effect in a message compose field). In some embodiments, providing the representation of the first visual effect includes displaying the first visual effect applied to the respective portion of the first content in the region of the messaging user interface for composing a message. In some embodiments, the computer system displays the first visual effect applied to the respective portion of the first content in the region of the messaging user interface for composing a draft message after providing the representation of the first visual effect (e.g., in response to detecting further input after the set of one or more inputs corresponding to selection of the first content for the message). Displaying the first visual effect applied to the respective portion of the first content in a region of the messaging user interface for composing a draft message enables the user to include the first visual effect in a draft message and to preview the message with the first visual effect prior to sending the message, which reduces mistakes and additional input, thereby providing improved visual feedback to the user and reducing the number of inputs needed to perform an operation.

In some embodiments, providing the representation of the first visual effect includes displaying, via the one or more display generation components, a user interface element (e.g., 620b in FIGS. 6C, 6D, 6E, 6K, 6R, 6S, 6U, and/or 6V) (e.g., an icon, button, and/or selectable graphical user interface element) corresponding to the first visual effect; and displaying the first visual effect applied to the respective portion of the first content in the region of the messaging user interface for composing a draft message occurs in response to detecting an input (e.g., 610e, 610v, 610x, 610z, and/or 610aa) (e.g., a touch, air gesture, button press, voice command, and/or other input) selecting the user interface element corresponding to the first visual effect (e.g., the computer system displays the first visual effect in the message compose field in response to selection of the user interface element corresponding to the first visual effect). In some embodiments, the user interface element corresponding to the first visual effect is the representation of the first visual effect. Displaying the first visual effect applied to the respective portion of the first content in the region of the messaging user interface for composing a draft message in response to detecting an input selecting the user interface element corresponding to the first visual effect enables the user to include the first visual effect in a message quickly and efficiently, thereby providing improved visual feedback to the user and reducing the number of inputs needed to perform an operation.

In some embodiments, displaying the first visual effect applied to the respective portion of the first content in the region of the messaging user interface for composing a draft message occurs in response to detecting the set of one or more inputs corresponding to selection of the first content for the message (and, in some embodiments, in accordance with a determination that the first content satisfies the first set of visual effect suggestion criteria) without detecting a user interface element (e.g., an icon, button, selectable graphical user interface element, and/or a selectable option in a suggestions bar) corresponding to the first visual effect (e.g., as described with reference to FIG. 6L) (e.g., the computer system displays the first visual effect in the message compose field automatically in response to detecting the set of one or more inputs corresponding to the request to compose the first content for the message without detecting selection of the user interface element corresponding to the first suggested visual effect). In some embodiments, the computer system displays an indication that the first suggested visual effect was automatically applied to the portion of the first content in the message compose field. In some embodiments, the indication that the first suggested visual effect was automatically applied includes highlighting (e.g., with a blue box) the portion of the first content in the message compose field. **In** some embodiments, while displaying the first suggested visual effect applied to the portion of the first content, the computer system detects an input (e.g., selection of a backspace button) and, in response, ceases to display the first suggested visual effect (e.g., removes the first suggested visual effect from the portion of the first content and/or undoes the first suggested visual effect in the message compose field. Displaying the first visual effect applied to the respective portion of the first content in the region of the messaging user interface for composing a draft message in response to detecting the set of one or more inputs corresponding to selection of the first content for the message without detecting a user interface element corresponding to the first visual effect enables the computer system to automatically suggest the first visual effect to the user without requiring additional inputs navigating the user interface, thereby providing improved visual feedback to the user, reducing the number of inputs needed to perform an operation, and providing additional control options without cluttering the user interface with additional displayed controls. **In** some embodiments, the set of one or more inputs (e.g., 610c,610k, 610u, 610w, and/or 610y) corresponding to selection of the first content for the message includes selection of a spacebar (e.g., 616c) (e.g., a space after the respective portion of the first content). **In** some embodiments, the last input in the set of one or more inputs is selection of a spacebar (e.g., in response to detecting selection of the spacebar and in accordance with a determination that the first content satisfies the first set of visual effect suggestion criteria, the computer system displays the first visual effect in the message compose field). Displaying the first visual effect applied to the respective portion of the first content in the region of the messaging user interface for composing a draft message in response to detecting selection of a spacebar enables the computer system to automatically suggest the first visual effect to the user without requiring additional inputs navigating the user interface, thereby providing improved visual feedback to the user, reducing the number of inputs needed to perform an operation, and providing additional control options without cluttering the user interface with additional displayed controls. **In** some embodiments, in response to detecting the set of one or more inputs corresponding to selection of the first content for the message: in accordance with a determination that the first content satisfies a second set of visual effect suggestion criteria, the computer system displays, via the one or more display generation components, a user interface element (e.g., an icon, button, and/or selectable graphical user interface element) corresponding to a second visual effect (e.g., a suggested visual effect), wherein the second set of visual effect suggestion criteria is different from the first set of visual effect suggestion criteria (e.g., the set of visual effect suggestion criteria that is met in FIG. 6K is different from the set of visual effect suggestion criteria that is met in FIG. 6L). For example, in some embodiments, in accordance with a determination that the first content satisfies the second set of visual effect suggestion criteria, the computer system displays (e.g., in a suggestions region of the user interface) a selectable user interface object that can be selected to apply the second visual effect to a first portion of the first content in the message compose field; and in accordance with a determination that the first content satisfies the first set of visual effect suggestion criteria, the computer system applies the first visual effect to a second portion of the first content in the message compose field (e.g., without displaying, and/or requiring selection of, the selectable user interface object). In some embodiments, the first portion of the first content is the same as the second portion of the first content. In some embodiments, the first portion of the first content is different from the second portion of the first content. In some embodiments, displaying the user interface element corresponding to the second visual effect includes displaying the second visual effect applied to the first portion of the first content (e.g., a preview of the second visual effect). Displaying a user interface element corresponding to a second visual effect in accordance with a determination that the first content satisfies a different set of visual effect suggestion criteria enables the computer system to suggest visual effects based on different context and content of the first content without requiring additional input from the user, thereby providing improved visual feedback to the user, reducing the number of inputs needed to perform an operation, providing additional control options without cluttering the user interface with additional displayed controls, and performing an operation when a set of conditions has been met without requiring further user input. In some embodiments, the first visual effect is different from the second visual effect (e.g., the suggested visual effect for the word "LONG" is different in FIG. 6K than in FIG. 6L). In some embodiments, the first suggested visual effect is the same as the second suggested visual effect. Displaying a user interface element corresponding to a different visual effect in accordance with a determination that the first content satisfies a different set of visual effect suggestion criteria enables the computer system to suggest different visual effects based on the context and content of the first content without requiring additional input from the user, thereby providing improved visual feedback to the user, reducing the number of inputs needed to perform an operation, providing additional control options without cluttering the user interface with additional displayed controls, and performing an operation when a set of conditions has been met without requiring further user input.

In some embodiments, while displaying the messaging user interface, the computer system displays, via the one or more display generation components, a menu user interface element (e.g., 618) (e.g., a visual effects menu user interface element, an icon, button, and/or selectable graphical user interface element); the computer system detects, via the one or more input devices, an input (e.g., 610d, 610g, and/or 610m) (e.g., a touch, air gesture, button press, voice command, and/or other input) corresponding to selection of the menu user interface element; in response to detecting the input corresponding to selection of the menu user interface element, the computer system displays, via the one or more display generation components, a representation (e.g., 630a and/or 630b) (e.g., an icon, button, and/or selectable graphical user interface element) of a first visual effect option and a representation (e.g., 630a and/or 630b) (e.g., an icon, button, and/or selectable graphical user interface element) of a second visual effect option that is different from the first visual effect option (e.g., the computer system displays a menu of visual effect options); while displaying the representation of the first visual effect option and the representation of the second visual effect option, the computer system detects, via the one or more input devices, an input (e.g., 610h and/or 610o) (e.g., an icon, button, and/or selectable graphical user interface element) corresponding to selection of a visual effect option; and in response to detecting the input corresponding to selection of a visual effect option: in accordance with a determination that the input corresponding to selection of a visual effect option is directed to the representation of the first visual effect option, the computer system displays (e.g., in the message compose field), via the one or more display generation components, a second portion of the first content having a visual effect corresponding to the first visual effect option applied to the second portion of the first content (e.g., the computer system displays the first visual effect applied to the first portion of the first content) (e.g., as described with reference to FIGS. 6H-6I); and in accordance with a determination that the input corresponding to selection of a visual effect option is directed to the representation of the second visual effect option, the computer system displays (e.g., in the message compose field), via the one or more display generation components, the second portion of the first content having a visual effect corresponding to the second visual effect option applied to the second portion of the first content (e.g., the computer system displays the second visual effect applied to the second portion of the first content) (e.g., as described with reference to FIGS. 6M-6N). Displaying a portion of the first content having a visual effect corresponding to the selected visual effect option enables the user to select a visual effect quickly and efficiently and with fewer inputs, thereby providing improved visual feedback to the user, reducing the number of inputs needed to perform an operation, and performing an operation when a set of conditions has been met without requiring further user input. In some embodiments, the computer system displays the menu user interface element in a suggestion region (e.g., a suggestion bar) of the messaging user interface. In some embodiments, the computer system displays the menu user interface element in response to a determination that the first content satisfies a set of menu criteria (e.g., the first set of visual effect suggestion criteria). In some embodiments, the second portion of the first content is a selected, designated, and/or highlighted portion of the first content. In some embodiments, the second portion of the first content is one or more words that are immediately adjacent to a cursor (e.g., in the message compose field). In some embodiments, after displaying the second portion of the first content having the selected visual effect (e.g., the visual effect corresponding to the first visual effect option or the second visual effect option) applied to the second portion of the first content, the computer system detects an input corresponding to a request to remove the selected visual effect from the second portion of the first content (e.g., to cease displaying the second portion of the first content with the selected visual effect); and in response to detecting the input corresponding to the request to remove the selected visual effect from the second portion of the first content, the computer system cease displaying the second portion of the first content with the selected visual effect. In some embodiments, the input corresponding to the request to remove the selected visual effect from the second portion of the first content includes de-selection and/or re-selection of the representation of the selected visual effect, selection of a representation of a third (e.g., different) visual effect, and/or selection of a backspace key.

In some embodiments, after (and/or, in some embodiment, in response to) detecting the set of one or more inputs corresponding to selection of the first content for the message, the computer system displays (e.g., in a message compose field, a suggestion region of the messaging user interface, and/or a menu of visual effects options), via the one or more display generation components, the respective portion of the first content with the first visual effect applied to the respective portion of the first content (e.g., the computer system displays a preview of the visual effect prior to the message being sent) (e.g., as described with reference to FIGS. 6C-6E). Displaying the respective portion of the first content with the first visual effect applied to the respective portion of the first content after detecting the set of one or more inputs corresponding to selection of the first content for the message enables the user to include the first visual effect in the message quickly and efficiently with fewer inputs, thereby providing improved visual feedback to the user and reducing the number of inputs needed to perform an operation. In some embodiments, displaying the respective portion of the first content with the first visual effect applied to the respective portion of the first content includes: displaying a first instance of the first visual effect applied to the respective portion of the first content; and after display the first instance of the first visual effect applied to the respective portion of the first content, displaying a second instance of the first visual effect applied to the respective portion of the first content (e.g., the computer system displays a loop of the visual effect) (e.g., device 600 repeats and/or loops the visual effect in 620b described with reference to FIGS. 6C-6E). Displaying a first instance of the first visual effect applied to the respective portion of the first content followed by a second instance of the first visual effect applied to the respective portion of the first content enables the computer system to repeatedly display the first visual effect without requiring the user to manually initiate additional instances of the visual effect and makes the first visual effect easier to observe, thereby providing improved visual feedback to the user and reducing the number of inputs needed to perform an operation.

In some embodiments, in response to detecting the set of one or more inputs corresponding to selection of the first content for the message: in accordance with a determination that the first content satisfies a set of spelling correction criteria, the computer system displays, via the one or more display generation components, a representation (e.g., 620b in FIG. 6R) of a suggested spelling correction for a third portion (e.g., 629a) (e.g., all or some but not all) of the first content without providing the representation of the first visual effect for the respective portion of the first content. In some embodiments, the computer system displays the representation of the suggested spelling correction while concurrently providing the representation of the first visual effect for the respective portion of the first content. Displaying a representation of a suggested spelling correction for a third portion of the first content without providing the representation of the first visual effect for the respective portion of the first content when the first content satisfies a set of spelling correction criteria provides the user with an option to correct the first content quickly and efficiently when the first content includes an error, thereby providing improved visual feedback to the user, reducing the number of inputs needed to perform an operation, providing additional control options without cluttering the user interface with additional displayed controls, and performing an operation when a set of conditions has been met without requiring further user input.

In some embodiments, the computer system displays, via the one or more display generation components, the first content in a message compose field (e.g., 612) of the messaging user interface (e.g., in a draft message), including displaying the first visual effect applied to the respective portion of the first content in the message compose field; while displaying the first visual effect applied to the respective portion of the first content in the message compose field, the computer system detects, via the one or more input devices, a set of one or more inputs (e.g., 610r, 610q, and/or 610s) (e.g., a set of one or more touches, air gestures, button presses, voice commands, and/or other inputs) corresponding to a request to edit the respective portion of the first content; and in response to detecting the set of one or more inputs corresponding to a request to edit the respective portion of the first content, the computer system edits the respective portion of the first content to generate an edited portion of the first content (e.g., as described in FIGS. 6N-6P), including displaying the edited portion of the first content having the first visual effect applied to the edited portion of the first content (e.g., as shown in FIG. 6P). Editing the respective portion of the first content and displaying the edited portion of the first content having the first visual effect applied to the edited portion of the first content in response to detecting the set of one or more inputs corresponding to a request to edit the respective portion of the first content provides the ability to revise the first content quickly and efficiently while maintaining the first visual effect, thereby providing improved visual feedback to the user and reducing the number of inputs needed to perform an operation. In some embodiments, the message compose field includes a region (e.g., a visually distinguished region) of the messaging user interface for composing a draft message. In some embodiments, editing the respective portion of the first content includes deleting, adding, and/or changing one or more characters of the respective portion of the first content. In some embodiments, in response to detecting the set of one or more inputs corresponding to a request to edit the respective portion of the first content: in accordance with a determination that the respective portion of the first content has not been deleted, the computer system displays the edited portion of the first content having the first suggested visual effect applied to the edited portion of the first content; and in accordance with a determination that the respective portion of the first content has been deleted, the computer system displays the edited portion of the first content without the first suggested visual effect applied to the edited portion of the first content. In some embodiments, after the message is sent to one or more participants of a message conversation, the computer system detects a set of one or more inputs corresponding to a request to edit the message, including a request to edit (e.g., change and/or remove) the first visual effect in the message; and in response to detecting the set of one or more inputs corresponding to the request to edit the message, the computer system edits the first visual effect in the message while maintaining the message in the message conversation. In some embodiments, the computer system displays the first content with the first visual effect applied to the respective portion of the first content and a formatting style (e.g., underline, italics, and/or bold) applied to the respective portion of the first content.

In some embodiments, the respective portion of the first content includes two or more words (e.g., the first visual effect is applied to multiple words) (e.g., as shown in and/or described with reference to FIGS. 6S, 6AD, 6AE, 6AH, 6AL, 6AM, and/or 6AO). In some embodiments, the respective portion of the first content includes only one word (e.g., the first visual effect is applied to only a single word). Providing a representation of the first visual effect for multiple words enables the computer system to apply the first visual effect to phrases and/or the relevant portion of the first content (e.g., without being constrained to a single word), thereby providing improved visual feedback to the user.

Note that details of the processes described above with respect to method 800 (e.g., FIG. 8 are also applicable in an analogous manner to the methods described above. For example, method 700 optionally includes one or more of the characteristics of the various methods described above with reference to method 800. For example, a representation of a visual effect can be provided as described in method 800 in accordance with a determination that content selected for a message satisfies a set of visual effect suggestion prior to displaying the message with the visual effect applied to the content as described in method 700.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve messaging communications. The present disclosure contemplates that in some instances, this gathered data may include personal information data that uniquely identifies or can be used to contact or locate a specific person. Such personal information data can include demographic data, location-based data, telephone numbers, email addresses, social network IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to improve messaging communications. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of electronic messaging, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, visual effects can suggested and/or displayed based on non-personal information data or a bare minimum amount of personal information, such as the content being requested by the device associated with a user, other non-personal information available to the computer system, or publicly available information.
Exemplary methods, non-transitory computer-readable storage media, computer systems, and computer program products, are set out in the following items.
1. A method, comprising:
   at a computer system that is in communication with one or more display generation components:
   displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and
   while displaying the messaging user interface, displaying, via the one or more display generation components, the first message, including:
      displaying the first content with a first visual effect applied to the first content; and
      displaying the second content without the first visual effect applied to the second content.
2. The method of item 1, wherein displaying the second content without the first visual effect applied to the second content includes adjusting a visual property of the second content.
3. The method of any of items 1-2, wherein displaying the second content without the first visual effect applied to the second content includes displaying the second content with a second visual effect applied to the second content, wherein the second visual effect is different from the first visual effect.
4. The method of any of items 1-3, further comprising:
   prior to displaying the first message, displaying, via the one or more display generation components, a preview of the first content with the first visual effect applied to the first content.
5. The method of any of items 1-4, wherein displaying the first content with the first visual effect applied to the first content includes:
   displaying a first instance of the first content with the first visual effect applied to the first content; and
   after displaying the first instance of the first content with the first visual effect applied to the first content, displaying a second instance of the first content with the first visual effect applied to the first content.
6. The method of any of items 1-5, further comprising:
   after displaying the first content with the first visual effect applied to the first content, detecting, via one or more input devices that are in communication with the computer system, a set of one or more inputs corresponding to a request to edit the first visual effect; and
   in response to detecting the set of one or more inputs corresponding to the request to edit the first visual effect, displaying, via the one or more display generation components, the first content without the first visual effect applied to the first content.
7. The method of any of items 1-6, wherein displaying the first content with the first visual effect applied to the first content includes:
   animating a first portion of the first content; and
   after animating the first portion of the first content, animating a second portion of the first content, wherein the second portion of the first content is different from the first portion of the first content.
8. The method of any of items 1-7, wherein displaying the first content with the first visual effect applied to the first content includes changing a font of the first content over time.
9. The method of any of items 1-8, wherein displaying the first content with the first visual effect applied to the first content includes changing a spacing between two or more characters of the first content over time.
10. The method of any of items 1-9, wherein displaying the first content with the first visual effect applied to the first content includes:
   at a first time, displaying the first content within a visually distinguished region of the messaging user interface; and
   at a second time different from the first time, displaying at least a portion of the first content at least partially outside the visually distinguished region of the messaging user interface.
11. The method of any of items 1-10, wherein displaying the first content with the first visual effect applied to the first content includes:
   at a first time, displaying the first message including a first portion of the first content; and
   at a second time different from the first time, displaying the first message without the first portion of the first content.
12. The method of any of items 1-11, wherein:
   the first content includes a first character and a second character different from the first character, and
   displaying the first content with the first visual effect applied to the first content includes:
      displaying a first visual transformation on the first character; and
      displaying a second visual transformation on the second character, wherein the second visual transformation is different from the first visual transformation.
13. The method of any of items 1-12, wherein displaying the first content with the first visual effect applied to the first content includes:
   in accordance with a determination that the first content corresponds to a first language, displaying the first content with the first visual effect applied to the first content according to a first characteristic; and
   in accordance with a determination that the first content corresponds to a second language that is different from the first language, displaying the first content with the first visual effect applied to the first content according to a second characteristic that is different from the first characteristic.
14. A non-transitory computer-readable storage medium storing one or more programs configured to be executed by one or more processors of a computer system that is in communication with one or more display generation components, the one or more programs including instructions for performing the method of any of items 1-13.
15. A computer system that is configured to communicate with one or more display generation components, the computer system comprising:
   one or more processors; and
   memory storing one or more programs configured to be executed by the one or more processors, the one or more programs including instructions for performing the method of any of items 1-13.
16. A computer system that is configured to communicate with one or more display generation components, comprising:
   means for performing the method of any of items 1-13.
17. A computer program product, comprising one or more programs configured to be executed by one or more processors of a computer system that is in communication with one or more display generation components, the one or more programs including instructions for performing the method of any of items 1-13.
18. A non-transitory computer-readable storage medium storing one or more programs configured to be executed by one or more processors of a computer system that is in communication with one or more display generation components, the one or more programs including instructions for:
   displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and
   while displaying the messaging user interface, displaying, via the one or more display generation components, the first message, including:
      displaying the first content with a first visual effect applied to the first content; and
   displaying the second content without the first visual effect applied to the second content.
19. A computer system configured to communicate with one or more display generation components, comprising:
   one or more processors; and
   memory storing one or more programs configured to be executed by the one or more processors, the one or more programs including instructions for:
      displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and
      while displaying the messaging user interface, displaying, via the one or more display generation components, the first message, including:
         displaying the first content with a first visual effect applied to the first content; and
         displaying the second content without the first visual effect applied to the second content.
20. A computer system configured to communicate with one or more display generation components, comprising:
   means for displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and
   means for, while displaying the messaging user interface, displaying, via the one or more display generation components, the first message, including:
      displaying the first content with a first visual effect applied to the first content; and
      displaying the second content without the first visual effect applied to the second content.
21. A computer program product, comprising one or more programs configured to be executed by one or more processors of a computer system that is in communication with one or more display generation components, the one or more programs including instructions for:
   displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and
   while displaying the messaging user interface, displaying, via the one or more display generation components, the first message, including:
      displaying the first content with a first visual effect applied to the first content; and
      displaying the second content without the first visual effect applied to the second content.
22. A method, comprising:
   at a computer system that is in communication with one or more display generation components and one or more input devices:
   displaying, via the one or more display generation components, a messaging user interface;
   while displaying the messaging user interface, detecting, via the one or more input devices, a set of one or more inputs corresponding to selection of first content for a message; and
   in response to detecting the set of one or more inputs corresponding to selection of the first content for the message:
      in accordance with a determination that the first content satisfies a first set of visual effect suggestion criteria, providing a representation of a first visual effect for a respective portion of the first content.
23. The method of item 22, wherein the first set of visual effect suggestion criteria includes a text criterion that is based on text of the first content.
24. The method of item 23, wherein the text criterion is satisfied when the text of the first content includes a predefined text string.
25. The method of any of items 23-24, wherein the text criterion is satisfied when the text of the first content includes one or more predefined characters.
26. The method of any of items 23-25, wherein the text criterion is satisfied when the text of the first content includes a predefined pattern.
27. The method of any of items 22-26, wherein the first set of visual effect suggestion criteria includes a formatting criterion that is based on formatting of the first content.
28. The method of any of items 22-27, wherein the first set of visual effect suggestion criteria includes an emoji criterion that is satisfied when the first content includes a predefined emoji.
29. The method of any of items 22-28, further comprising:
   in response to detecting the set of one or more inputs corresponding to selection of the first content for the message:
   in accordance with a determination that the first content satisfies a second set of visual effect suggestion criteria, wherein the second set of visual effect suggestion criteria is different from the first set of visual effect suggestion criteria, providing a representation of a second visual effect for a first portion of the first content, wherein the second visual effect is different from the first visual effect.
30. The method of any of items 22-29, wherein providing the representation of the first visual effect for the respective portion of the first content includes displaying, via the one or more display generation components, the representation of the first visual effect in a region of the messaging user interface without selecting the first visual effect for inclusion in the message.
31. The method of any of items 22-30, further comprising:
   after detecting the set of one or more inputs corresponding to selection of the first content for the message, displaying, via the one or more display generation components, the first visual effect applied to the respective portion of the first content in a region of the messaging user interface for composing a draft message.
32. The method of item 31, wherein:
   providing the representation of the first visual effect includes displaying, via the one or more display generation components, a user interface element corresponding to the first visual effect; and
   displaying the first visual effect applied to the respective portion of the first content in the region of the messaging user interface for composing a draft message occurs in response to detecting an input selecting the user interface element corresponding to the first visual effect.
33. The method of any of items 31-32, wherein displaying the first visual effect applied to the respective portion of the first content in the region of the messaging user interface for composing a draft message occurs in response to detecting the set of one or more inputs corresponding to selection of the first content for the message without detecting a user interface element corresponding to the first visual effect.
34. The method of item 33, wherein the set of one or more inputs corresponding to selection of the first content for the message includes selection of a spacebar.
35. The method of any of items 33-34, further comprising:
   in response to detecting the set of one or more inputs corresponding to selection of the first content for the message:
   in accordance with a determination that the first content satisfies a second set of visual effect suggestion criteria, displaying, via the one or more display generation components, a user interface element corresponding to a second visual effect, wherein the second set of visual effect suggestion criteria is different from the first set of visual effect suggestion criteria.
36. The method of item 35, wherein the first visual effect is different from the second visual effect.
37. The method of any of items 22-36, further comprising:
   while displaying the messaging user interface, displaying, via the one or more display generation components, a menu user interface element;
   detecting, via the one or more input devices, an input corresponding to selection of the menu user interface element;
   in response to detecting the input corresponding to selection of the menu user interface element, displaying, via the one or more display generation components, a representation of a first visual effect option and a representation of a second visual effect option that is different from the first visual effect option;
   while displaying the representation of the first visual effect option and the representation of the second visual effect option, detecting, via the one or more input devices, an input corresponding to selection of a visual effect option; and
   in response to detecting the input corresponding to selection of a visual effect option:
      in accordance with a determination that the input corresponding to selection of a visual effect option is directed to the representation of the first visual effect option, displaying, via the one or more display generation components, a second portion of the first content having a visual effect corresponding to the first visual effect option applied to the second portion of the first content; and
      in accordance with a determination that the input corresponding to selection of a visual effect option is directed to the representation of the second visual effect option, displaying, via the one or more display generation components, the second portion of the first content having a visual effect corresponding to the second visual effect option applied to the second portion of the first content.
38. The method of any of items 22-37, further comprising:
   after detecting the set of one or more inputs corresponding to selection of the first content for the message, displaying, via the one or more display generation components, the respective portion of the first content with the first visual effect applied to the respective portion of the first content.
39. The method of item 38, wherein displaying the respective portion of the first content with the first visual effect applied to the respective portion of the first content includes:
   displaying a first instance of the first visual effect applied to the respective portion of the first content; and
   after display the first instance of the first visual effect applied to the respective portion of the first content, displaying a second instance of the first visual effect applied to the respective portion of the first content.
40. The method of any of items 22-39, further comprising:
   in response to detecting the set of one or more inputs corresponding to selection of the first content for the message:
   in accordance with a determination that the first content satisfies a set of spelling correction criteria, displaying, via the one or more display generation components, a representation of a suggested spelling correction for a third portion of the first content without providing the representation of the first visual effect for the respective portion of the first content.
41. The method of any of items 22-40, further comprising:
   displaying, via the one or more display generation components, the first content in a message compose field of the messaging user interface, including displaying the first visual effect applied to the respective portion of the first content in the message compose field;
   while displaying the first visual effect applied to the respective portion of the first content in the message compose field, detecting, via the one or more input devices, a set of one or more inputs corresponding to a request to edit the respective portion of the first content; and
   in response to detecting the set of one or more inputs corresponding to a request to edit the respective portion of the first content, editing the respective portion of the first content to generate an edited portion of the first content, including displaying the edited portion of the first content having the first visual effect applied to the edited portion of the first content.
42. The method of any of items 22-41, wherein the respective portion of the first content includes two or more words.
43. A non-transitory computer-readable storage medium storing one or more programs configured to be executed by one or more processors of a computer system that is in communication with one or more display generation components and one or more input devices, the one or more programs including instructions for performing the method of any of items 22-42.
44. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 22-42.
45. A computer system that is configured to communicate with one or more display generation components and one or more input devices, comprising:
   means for performing the method of any of items 22-42.
46. A computer program product, comprising one or more programs configured to be executed by one or more processors of a computer system that is in communication with one or more display generation components and one or more input devices, the one or more programs including instructions for performing the method of any of items 22-42.
47. A non-transitory computer-readable storage medium storing one or more programs configured to be executed by one or more processors of a computer system that is in communication with one or more display generation components and one or more input devices, the one or more programs including instructions for:
   displaying, via the one or more display generation components, a messaging user interface;
   while displaying the messaging user interface, detecting, via the one or more input devices, a set of one or more inputs corresponding to selection of first content for a message; and
   in response to detecting the set of one or more inputs corresponding to selection of the first content for the message:
      in accordance with a determination that the first content satisfies a first set of visual effect suggestion criteria, providing a representation of a first visual effect for a respective portion of the first content.
48. A computer system configured to communicate with one or more display generation components and one or more input devices, comprising:
   one or more processors; and
   memory storing one or more programs configured to be executed by the one or more processors, the one or more programs including instructions for:
      displaying, via the one or more display generation components, a messaging user interface;
      while displaying the messaging user interface, detecting, via the one or more input devices, a set of one or more inputs corresponding to selection of first content for a message; and
      in response to detecting the set of one or more inputs corresponding to selection of the first content for the message:
         in accordance with a determination that the first content satisfies a first set of visual effect suggestion criteria, providing a representation of a first visual effect for a respective portion of the first content.
49. A computer system configured to communicate with one or more display generation components and one or more input devices, comprising:
   means for displaying, via the one or more display generation components, a messaging user interface;
   means for, while displaying the messaging user interface, detecting, via the one or more input devices, a set of one or more inputs corresponding to selection of first content for a message; and
   means for, in response to detecting the set of one or more inputs corresponding to selection of the first content for the message:
      in accordance with a determination that the first content satisfies a first set of visual effect suggestion criteria, providing a representation of a first visual effect for a respective portion of the first content.
50. A computer program product, comprising one or more programs configured to be executed by one or more processors of a computer system that is in communication with one or more display generation components and one or more input devices, the one or more programs including instructions for:
   displaying, via the one or more display generation components, a messaging user interface;
   while displaying the messaging user interface, detecting, via the one or more input devices, a set of one or more inputs corresponding to selection of first content for a message; and
   in response to detecting the set of one or more inputs corresponding to selection of the first content for the message:
      in accordance with a determination that the first content satisfies a first set of visual effect suggestion criteria, providing a representation of a first visual effect for a respective portion of the first content.
   The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method, comprising:
at a computer system that is in communication with one or more display generation components:
displaying, via the one or more display generation components, a messaging user interface that includes a message conversation between a first participant and one or more other participants, the message conversation including one or more messages between the first participant and the one or more other participants, wherein the one or more messages include a first message that includes first content and second content that is different from the first content; and
while displaying the messaging user interface, displaying, via the one or more display generation components, the first message, including:
displaying the first content with a first visual effect applied to the first content; and
displaying the second content without the first visual effect applied to the second content.

2. The method of claim 1, wherein displaying the second content without the first visual effect applied to the second content includes adjusting a visual property of the second content.

3. The method of any of claims 1-2, wherein displaying the second content without the first visual effect applied to the second content includes displaying the second content with a second visual effect applied to the second content, wherein the second visual effect is different from the first visual effect.

4. The method of any of claims 1-3, further comprising:
prior to displaying the first message, displaying, via the one or more display generation components, a preview of the first content with the first visual effect applied to the first content.

5. The method of any of claims 1-4, wherein displaying the first content with the first visual effect applied to the first content includes:
displaying a first instance of the first content with the first visual effect applied to the first content; and
after displaying the first instance of the first content with the first visual effect applied to the first content, displaying a second instance of the first content with the first visual effect applied to the first content.

6. The method of any of claims 1-5, further comprising:
after displaying the first content with the first visual effect applied to the first content, detecting, via one or more input devices that are in communication with the computer system, a set of one or more inputs corresponding to a request to edit the first visual effect; and
in response to detecting the set of one or more inputs corresponding to the request to edit the first visual effect, displaying, via the one or more display generation components, the first content without the first visual effect applied to the first content.

7. The method of any of claims 1-6, wherein displaying the first content with the first visual effect applied to the first content includes:
animating a first portion of the first content; and
after animating the first portion of the first content, animating a second portion of the first content, wherein the second portion of the first content is different from the first portion of the first content.

8. The method of any of claims 1-7, wherein displaying the first content with the first visual effect applied to the first content includes changing a font of the first content over time.

9. The method of any of claims 1-8, wherein displaying the first content with the first visual effect applied to the first content includes changing a spacing between two or more characters of the first content over time.

10. The method of any of claims 1-9, wherein displaying the first content with the first visual effect applied to the first content includes:
at a first time, displaying the first content within a visually distinguished region of the messaging user interface; and
at a second time different from the first time, displaying at least a portion of the first content at least partially outside the visually distinguished region of the messaging user interface.

11. The method of any of claims 1-10, wherein displaying the first content with the first visual effect applied to the first content includes:
at a first time, displaying the first message including a first portion of the first content; and
at a second time different from the first time, displaying the first message without the first portion of the first content.

12. The method of any of claims 1-11, wherein:
the first content includes a first character and a second character different from the first character, and
displaying the first content with the first visual effect applied to the first content includes:
displaying a first visual transformation on the first character; and
displaying a second visual transformation on the second character, wherein the second visual transformation is different from the first visual transformation.

13. The method of any of claims 1-12, wherein displaying the first content with the first visual effect applied to the first content includes:
in accordance with a determination that the first content corresponds to a first language, displaying the first content with the first visual effect applied to the first content according to a first characteristic; and
in accordance with a determination that the first content corresponds to a second language that is different from the first language, displaying the first content with the first visual effect applied to the first content according to a second characteristic that is different from the first characteristic.

14. A computer-readable storage medium storing one or more programs configured to be executed by one or more processors of a computer system that is in communication with one or more display generation components, the one or more programs including instructions for performing the method of any of claims 1-13.

15. A computer system that is configured to communicate with one or more display generation components, the computer system comprising:
one or more processors; and
memory storing one or more programs configured to be executed by the one or more processors, the one or more programs including instructions for performing the method of any of claims 1-13.
